## Europäisches Patentamt
## European Patent Office
## Office européen des brevets

(11) Publication number: **0 134 544**
**B1**

(12) **EUROPEAN PATENT SPECIFICATION**

(45) Date of publication of patent specification: 25.04.90

(21) Application number: 84109261.2

(22) Date of filing: 03.08.84

(51) Int. Cl.⁵: **H 04 M 11/06,** H 04 Q 11/04, H 04 L 12/54, H 04 L 12/58, H 04 L 12/28

(54) Variable band distributed switching node with dynamic hybrid-frame management.

(30) Priority: 04.08.83 IT 6784583

(43) Date of publication of application:
20.03.85 Bulletin 85/12

(45) Publication of the grant of the patent:
25.04.90 Bulletin 90/17

(84) Designated Contracting States:
BE CH DE FR GB LI NL SE

(56) References cited:
EP-A-0 059 149
GB-A-1 269 116
US-A-4 154 983

PROCEEDINGS OF THE IEEE 1981 NATIONAL AEROSPACE AND ELECTRONICS CONFERENCE, vol. 1, 19th-21st May 1981, pages 350-356, IEEE, Dayton, US; M.J. ROSS et al.: "A distributed processing architecture for voice/data switching"

(73) Proprietor: CSELT Centro Studi e Laboratori Telecomunicazioni S.p.A.
Via Guglielmo Reiss Romoli, 274
I-10148 Turin (IT)

(72) Inventor: Gabrielli, Luciano
Via Torino, 93/3
Leini (To) (IT)
Inventor: Lotito, Nicola
Via Madonna del Ponte, n 1
Avigliana (To) (IT)
Inventor: Sposini, Maurizio
Via Brusà, 10
Valdellatorre (To) (IT)

(74) Representative: Riederer Freiherr von Paar zu Schönau, Anton et al
Van der Werth, Lederer & Riederer Freyung 615
Postfach 2664
D-8300 Landshut (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 134 544 B1**

56 References cited:

NATIONAL TELECOMMUNICATIONS
CONFERENCE, vol. 1/4, 29th November - 3rd
December 1981, pages 1-5, IEEE, New Orleans,
US; M.J. ROSS et al.: "Performance analysis of
hybrid (circuit/packet) switching concepts"

COMSAT TECHNICAL REVIEW, vol. 6, no. 1,
Spring 1976, pages 127-158, Washington, US;
S.J. CAMPANELLA: "Digital speech
interpolation"

## Description

The present invention concerns private or public integrated services networks, and more particularly it relates to a variable-band distributed switching node with dynamic hybrid-frame management.

An integrated services network, as known, employs the same transmitting and switching units for a wide range of services (telephone, video, data...transmissions), with quite different characteristics such as:

transmission rates (and consequently band occupation) very different from one another, and possibly variable (e.g. from some kbit/s to many Mbit/s);

circuit or packet switching depending on whether or not the information flow presents synchronous characteristics;

maximum delay accepted ranging from few milliseconds to some hours.

In these networks it has proved advantageous to subdivide the network activity into repetitive frames, composed of two regions assigned to circuit-switched communications (basically time-division multiplexed, so that each is alotted a time interval or channel of duration proportional to transmission rate) and to packet-switched communications respectively. These frames are generally referred to as hybrid frames.

With such an organization of the information flow, the switching nodes in the network ought to have the flexibility necessary to process each communication according its characteristics, without imposing restraints to transmission modalities and by reducing to a minimum format changes in the information flow.

Such nodes are generally called "synchronous nodes".

A number of embodiments of these asynchronous nodes are known in the technique.

A first solution is described by M. J. Ross, A. C. Tabbot and J. A. Waite in the paper "Design Approaches and Performance Criteria for Integrated Voice/Data Switching" (Proceedings of the IEEE, Vol. 65 N. 9, Sept. 1977, pages 1283 and fol.) and by M. J. Ross, J. H. Gottschalk and E. A. Harrington in the memory "An architecture for a flexible integrated voice/data switch" presented at the International Conference on Communication, Seattle, 8—12 June, 1980.

According to this embodiment a node comprises a plurality of modules connected on one side to subscribers or to trunks conveying hybrid frames, and on the other side to a pair of common buses for signalling and for "data", respectively, a single nodal module, also connected to the two buses and having routing and supervising functions, and a timing module. For each communication the information arriving from subscribers or trunks is stored inside the respective module, basically at the instant at which it arrives; such information is presented on the bus upon request of the addressee module in a time phase in which that module can access the bus.

Hence the operation inside the node is synchronous, as each module is assigned a predetermined time slot. A solution of this kind simplifies the information transfer procedures, but it presents a number of inconveniences: due to the fixed-duration intervals for information reading, the node satisfactorily processes circuit-switched communications, but is scarcely efficient for wide-band or packet-switched communications as information flow splitting may be required; the presence of a single timing module which is to carry out the most important system function is a reliability node; a further limitation to the efficiency is that an interval assigned to a module cannot be used by other modules even if said module has no operation to carry out; the node capacity expansion can require the substitution of the nodal and timing modules.

A second solution has been described by M. Devault, J. P. Quinquis and Y. Ronaud in the paper "Asynchronous time division switching: a new concept for ISDN nodes" presented at ISS'81 (Montreal 21—25 September 1981).

According to this solution a node consists of a plurality of modules connected to local lines or trunks and interconnected by a set of buses allowing complete and direct accessibility from one module to any other.

Inside the node the information relevant to the input and output channels (time slots) is associated with each sample of a circuit-switched communication or with each packet incoming to the node, and blocks are formed which are asynchronously switched by following substantially a packet switching procedure.

Thus problems relevant to the presence of centralized modules are avoided, and variable-band communications can be processed; however a signal processing is needed also for circuit switching communications, which moreover require reduction of the variability of transit delay through the network since such delay, as known, can degrade communication quality.

In the distributed switching node provided by the invention, in presence of both communication types, the information on the bus is organized as hybrid frames and allows both wide-band and variable-band to be handled also for circuit-switched communications.

The invention characteristics are defined in Claim 1.

The use of hybrid frames for information exchange within a communication system is described for instance in European Patent Application No. 83 105 631.2 published as EP—A—0096419. Yet this application concerns the information exchange among different nodes of a switching system and not inside a node; besides it requires the memorization, on a frame basis, of the activity on the bus, whereby it does not allow dynamic management of hybrid frames, with variation in the band assigned to each synchronous communication and with channel compaction on a frame basis.

The features of the invention will become more apparent in connection with the annexed drawings, in which:

Figure 1 represents the general structure of a switching node;

Figure 2 shows the structure of the hybrid frame on the node bus;

Figure 3 is a block diagram of a subscriber's module;

Figures 4, 5 are detailed block diagrams of the devices managing the hybrid frame region allotted to circuit-switched communications;

Figures 6—12 are circuit diagrams of a number of blocks of Figures 4, 5;

Figures 13—20 are flow charts of the operations of some of the logic networks in the node;

Figure 21 is a partial block diagram of a variant;

Figure 22 is a circuit diagram of the device checking availability of speech channels; and

Figures 23, 24, are flow charts of the operations of the variant of Figure 21.

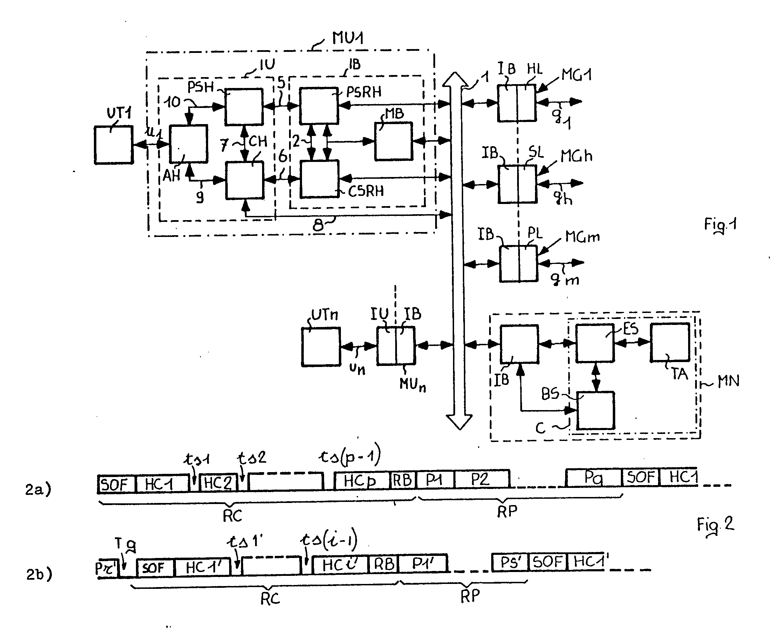

In Figure 1 a distributed switching node for handling hybrid frames in an integrated services network consists of a plurality of independent modules connected to a bidirectional common bus 1, on which the information emitted from a module is rendered available to all the others. The modules can be connected to subscriber's lines $u_1...u_n$ (subscriber modules MU1...MUn) which convey circuit and/or packet switched communications, or to trunks $g_1...g_h...g_m$ which convey hybrid frames, or PCM frames or packets (trunk modules MG1...MGh...Mgm). A nodal module MN carries out those functions which are conveniently centralized.

Subscriber and trunk modules can be considered as subdivided into two parts. The first part IB is equal for all the modules, interfaces the respective module with bus 1 and cooperates with interfaces IB of all the other modules to form on said bus a hybrid frame (referred to hereinafter as main frame). The second part, handling line information, is specialized according to the type of module; that second part is denoted by IU for the subscriber modules and by HL, SL, PL respectively for trunk modules connected to trunks conveying hybrid frames (module MG1), PCM frames (MGh) or packets (MGm). It is worth noting that hybrid frames transmitted on the different trunks, and those relevant to the two transmission directions on the same trunk are asynchronous with respect to one another. As to PCM frames, a common channel signalling is assumed, for instance according to CCITT No. 7 system, which signalling is processed inside the node by packet techniques.

Also nodal module MN can be considered as consisting of two parts, namely a device IB, performing as the homonymous devices of modules MU and MG, and a part C containing the map of the associations between subscribers and devices IB as well as possible data relating to charges and so on. To the purposes of the present invention the functions of C, apart from those relating to routing, are of no interest.

Part C of MN is schematized by a buffer BS for the temporary storage of the signalling arriving from or addressed to modules MU, MG, a processor ES of such signalling which recognizes and processes the incoming signalling and prepares the outgoing signalling, and memory TA for routing maps, connected to processor ES.

As indicated for subscriber module MU1, interface IB comprises:

a device PSRH, mangaging the frame region which is to be packet-switched, i.e. a device controlling the access to the bus for transmission and reception of data packets and of signalling packets of circuit-switched communications;

a device CSRH controlling the access to the bus for reception and transmission of circuit-switched channels, and managing the main frame;

a device MB monitoring the activity on the bus and connected to both PSRH and CSRH.

As device PSRH proceses also the signalling relating to circuit communications, it must exchange information with CSRH, as schematized by line 2.

Devices PSRH, CSRH are connected to devices PSH managing and processing the information flow relating to packet-switched communications and the signalling of circuit-switched communications, and to devices CH managing and processing the information flow relevant to circuit-switched communications. Connections among PSRH, CSRH and PSH, CH are schematized by lines 5 and 6.

A link between PSH, CH (line 7) is also provided, for the same reasons for which PSRH and CSRH are interconnected; a link 8 connects CH and bus 1, as the information flow relative to circuit-switched communications does not require processing in CSRH.

Devices PSH, CH are connected to a demultiplexing unit AH separating data packets, signalling and the information flows of circuit-switched communications, forwarding them to devices PSH or CH, as the case may be, through connections 9, 10 respectively.

The structure of AH will obviously depend on frame organization on subscriber's lines.

Devices AH, PSH, CH form as a whole the specialized portion IU of module MU1.

The general structure of devices HL, SL is identical to that of IU; as far as PL is concerned, CH is not required.

Figure 2a shows the structure of the main hybrid frame on bus 1. Said frame is formed only starting from the first request to establish a circuit-switched communication (signalled by a booking packet) and is maintained only if there are circuit-switched communications in progress; otherwise, the whole activity takes place according to usual packet-switching techniques. A frame starts with a start-of-frame flag SOF and is partitioned into two regions allotted to circuit or packet switched communications, respectively; the two regions are separated by a region boundary flag RB. The frame end is not expressly signalled, but it can be recognized by the start-of-frame flag of the subsequent frame.

The first region RC ("circuit region") is composed of a plurality of time slots or channels HC1...HCp whose length depends on the characteristics of the individual communications and which are assigned each to a communication direction; the second region RP ("packet region") comprises a number of packets P1...Pq depending on the band availability for packet traffic; under low packet traffic conditions, the band available in region RP could be partly or totally unexploited.

Flag SOF is emitted by the station the first channel is assigned to, on the appropriate wire of bus 1, and must have a duration longer than twice the round trip delay Tr; this is meant to establish a guard time Tg between the end of the packet region and the beginning of the subsequent frame, to avoid collisions among the packets of a frame and the circuit channels of the subsequent frame.

Adjacent channels in circuit region are separated in turn by an inactivity time ts1...ts(p-1) which depends on mutual channel position and is usually shorter than guard time Tg. The end of time Tg indicates the absence of a channel in a frame and then the end of the corresponding communication. The bus activity is recognized by the presence of clock signals emitted by the active module on an appropriate wire of bus 1. The Figure does not show the guard times between adjacent packets, since as known, they can be obtained by suitable flags incorporated in the packet itself, depending on the managing protocol adopted.

The region boundary flag RB is emitted on an appropriate wire of bus 1 by the module processing the last channel of the circuit region. The relative extension of the two regions can vary frame by frame depending on the intensity of circuit-switched traffic, and the whole frame could even be devoted to this type of traffic.

In the most general case, the band assigned to the individual channels can vary frame by frame.

The necessity for these variations is for instance due, in case of speech communications, to the passage from a period of active signal to a silent period or vice versa, and in case of video transmissions with adaptive differential coding of the information, to variations in the quantity of information to be transmitted.

On the contrary the maximum frame duration is nearly constant, and corresponds basically to the maximum interval which can separate two information blocks of a circuit-switched communication without degrading the transmission quality. The phrase "almost constant" takes into account that according to the present invention the emission of flag SOF is effected by the module processing the first channel of the circuit region; therefore, in case of release of one or more initial channels during a frame which has duration Z, flag SOF in the subsequent frame is not exactly emitted after a time Z past the flag of the preceding frame, but after a time Z increased by one or more guard times Tg.

Of course also the minimum frame duration cannot decrease under a certain limit. In the frame shown in Figure 2b the release of the first channel (HC1 in Figure 2a) has been assumed, so that between the end of the packet region of the preceding frame and the emission of flag SOF there is an interval Tg. Flag SOF is now asociated with the new first active channel (HCI', corresponding for instance to channel HC2 in Figure 2a). Flag RB is emitted by the last channel HCi', which corresponds for instance to last channel HC$_p$ of the frame of Figure 2a but requires now a reduced band. As to frame formation and management, when one of the modules MU, MG is to establish the first communication to be circuit-switched, it transmits on the bus through interface IB the booking packet which, when received by interfaces IB of other modules, starts therein the count of time Z, and causes memorization of the information that a circuit-switched communication is waited for.

Until the end of time Z the bus remains available for packet traffic. Possible other requests (CRP) for channels, sent by other modules, are queued to the first and entail the updating of number NCA of channels waited for and the memorization of the respective channel position (NCP).

Once Z is over, the interface processing the first active channel of region RC stops the ongoing packet activity (both in transmission and in reception) and enables the transmission of SOF; afterwards it enables the transmission of the information relating to the circuit.

The reception of flag SOF entails, in the other modules, on one side the synchronization of the counters of time Z and on the other side the immediate interruption of the ongoing packet activity, if any.

Once all the NCA channels waited for have been handled, the interface relating to the last active circuit enables the transmission of flag RB indicating the beginning of the packet regions. The same procedure repeats' for the subsequent frames, during which new circuit channels are requested by sending a packet CRP during region RP of the frame.

The channel request by packet CRP does not entail, by the access interface involved, a preventive check of the actual band availability on the bus, that is why the only transmission of packet CRP does not ensure the actual channel acquisition for the interface. Packet CRP does not contain the information on the requested band, as it only aims at informing the other interfaces of the channel request by the sending interface. To check such availability, in the subsequent frame, in correspondence with the channel allotted, the module sends onto the bus a signal block without information content, having a length equivalent to the desired band. Only when the transmission of this block has not been interrupted by the arrival of flag SOF of the subsequent frame, the channel is actually assigned to the module.

The intention of releasing a channel by a module is implicitly signalled to the other modules by inhibiting the transmission in correspondence with the channel involved. The absence of the channel is detected by all the other modules by guard-time Tg being over.

The channel release gives rise to a correspondent reduction in circuit-region extension and to the renumbering of the active channels.

The release of all channels is detected by the lack of signal SOF and causes recovery of a free activity for packet traffic without any band restriction.

Packet access to the bus is controlled by any known protocol e.g. a CSMA-CD protocol.

The structure of devices PSRH, CSRH, CH will be now described in greater details for an exemplary embodiment of the invention in which the band assigned to the individual communications, as well as the frame duration (apart from the fluctuations due to the initial channel release) have been assumed to be constant.

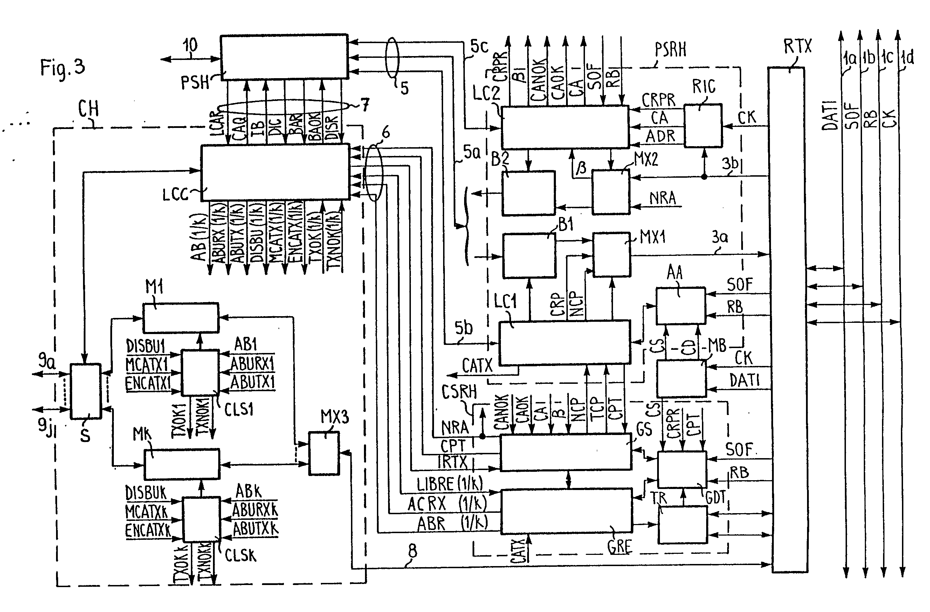

With reference to Figure 3, bus 1 has been split into four wires 1a, 1b, 1c, 1d on which data flags SOF, RB and clock signals CK respectively, are present. Block RTX schematizes the set of signal transmitters and receivers allowing decoupling of the bus from devices CSRH, PSRH, MB.

Block PSRH is subdivided into two different parts designed for transmission towards and reception from the bus. The transmitting part is to obtain the bus control according to the previously-described access algorithm, to forward over the bus the packets sent by PSH, to complete signalling packets CAR, CAI (which indicate the request for a receiving channel and are sent by a calling and a called party, respectively) with the relevant channel numbers, and to forward the packet of request for the assignment of a new circuit channel (CRP).

To this aim a buffer memory B1 of the FIFO type is provided which temporarily memorizes one or a plurality of packets (or even a part of a packet, depending on the characteristics of PSH) it receives from PSH through wires 5a of connexion 5; subsequently B1 forwards its content to RTX through a multiplexer MX1 and a wire 3a, upon command of a control logic LC1. The multiplexer inserts into the information flow directed towards bus 1 the booking packets (extracted from a suitable register being part for instance of LC1), and inserts into packets CAR, CAI the number NCP of the channel assigned to the communication; that information is supplied to MX1 through LC1, by a device GS of CSRH, whose functions will be described hereinafter. Furthermore LC1 receives from GS the request TCP for sending a booking packet and supplies CSRH with signals CPT, CATX acknowledging the transmission of such packets and of packets CAR, CAI, respectively.

For its operation, LC1 exchanges with PSH through a wire 5b the control signals relating to the packet transfer from PSH to B1 (which signals will be examined while describing the operation of the invention) and exchanges information with a further logic network AA carrying out the operations relating to the bus access on the basis of signals SOF and RB, of the information on the occurrence of collisions supplied by MB (signal CD, extracted for instance by comparison between data outgoing from MX1 and the same data as present on wire 1a of the bus), and of the information on the bus activity, extracted from clock signals present over wire 1d. The latter information is here indicated as a whole by signal CS, but it will obviously comprise the beginning-of-carrier and end-of-carrier signals.

The receiving part must recognize and temporarily store the packets addressed to the interface its belongs to and, among these packets, those concerning circuit-channel management and requiring at least in part a real-time processing. These particular packets are:

booking packets CRP, through which the setup of a new circuit channel in the subsequent frame is requested; the packet reception is to be communicated to CSRH, but the packet itself has not to be forwarded to PSH;

packets CAR, CAI which contain the number of the channel allotted to the calling or the called party, respectively; also the reception of said packets is to be communicated to CSRH, in conjunction with number $\beta$ of the channel; the packets themselves are forwarded to PSH upon replacing $\beta$ with identity NRA of the device (hereinafter referred to as "register") which in CSRH manages the channel (information supplied by CSRH).

To effect these operations, the receiving part comprises a buffer memory B2, controlled by logic LC2 and connected on one side (towards PSH) to wires 5a and on the other side to wire 3b on which the received data are present.

A multiplexing-demultiplexing system MX2 is arranged between B2 and wire 3b for extracting number $\beta$ from packets CAR, CAI and replaing it by information NRA.

Logic LC2 is connected on one side to PSH (connection 5c) with which it exchanges the control signals for the data transfer from memory B2 to PSH (signal which will be examined in the operation description), and on the other side to a circuit RIC which receives the data from wire 3b and effects the recognitions described above. As a consequence of such recognitions RIC supplies LC2 with signals ADR (packet addressed to the interface RIC belongs to), CA (packet CAR or CAI), CRPR (packet CRP). Signal CRPR causes LC2 to disable memory B2. Signals CRPR and CA are transferred from LC2 to the devices of CSRH, in conjunction with signals CAOK, CANOK indicating correct or incorrect reception of packets CAR/CAI, and with number $\beta$ extracted from such packets.

Block CSRH comprises:

a bank GRE of registers managing individual channels and comprising a suitable number k of identical elements;

logic network GS processing signals relating to registers and channels;

a logic network TR building and maintaining the hybrid frame;

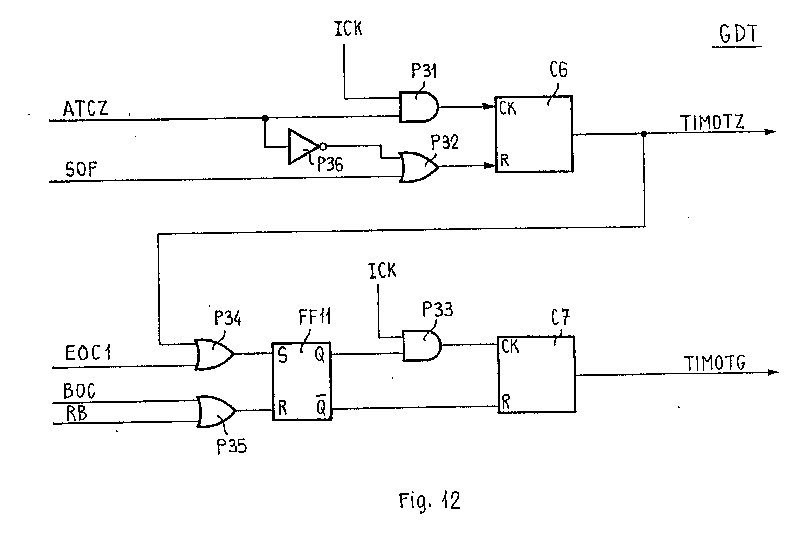

a decoder GDT of timing information whose structure will be described with reference to Figure 12.

Information exchanged between CSRH and PSRH has already been examined. Signals exchanged among GS, GRE, TR, GDT will be examined with reference to the following Figures and are not indicated here in detail. The signals received from and transmitted towards the bus (SOF, RH) as well as those exchanged through connection 6 with a logic network LCC belonging to CH have on the contrary been individually indicated; the meaning of the latter signals will be explained in the description of the devices of CSRH and in the description of the operation.

Indication (1/k) associated with input/output signals of GRE means that such signals are individual for each register.

Block cH comprises a bank of k buffers M1...Mk with controllers CLS1...CLSk and a control logic LCC managing the association between the buffers and the circuit communications. Buffers M1...Mk are connected on one side to line 8 through a multiplexer-demultiplexer MX3 and on the other side to a switching matrix S which, upon command of LCC, connects a subscriber interested in a communication with an available buffer for each direction of the communication. Matrix S is also connected to a plurality of lines 9a...9j on which the information flow relating to the circuit communications of a plurality of subscribers is present.

Buffers M1...Mk are then used for storing information flows either coming from or directed to bus 1, and during a communication are associated each with one of the registers in GRE.

The buffers are assigned to reception or transmission by the respective controller upon command of LCC. As usual, each buffer will be divided into two parts which alternate at each frame in reading and writing operations upon command of the respective controller CLS1...CLSk. Controllers CLS1...CLSk control reading/writing in respective buffers M1...Mk so that an information block capable of occupying the band requested by that channel is transmitted towards the bus. The necessary information is supplied by LCC during the initialization phase; besides, LCC sends CLS1...CLSk, when an outgoing connection is requested, the commands necessary to check the band availability on the bus and receives from the controllers the information on the transmission and/or check result.

The signals exchanged between LCC and CLS1...CLSk will be examined in greater details when describing the operations; in the Figure the signals exchanged between LCC and PSH are expressely indicated and will be examined hereinafter; the signals concerning the transfer of information from subscribers' lines to the buffers and vice versa will not be described as they are of no interest for the invention and are quite conventional.

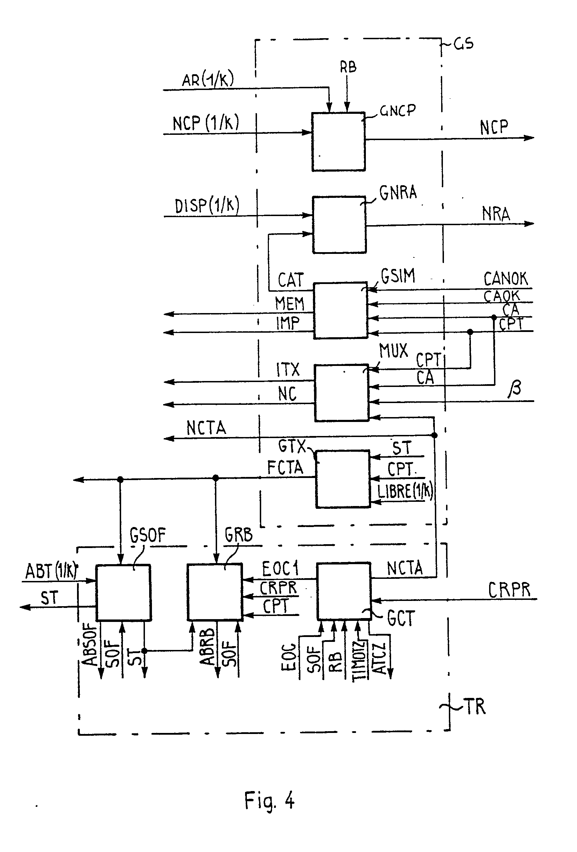

Figure 4 shows in greater detail the structure of devices TR, GS.

Frame managing device TR is subdivided into three parts GCT, GSOF, GRB which respectively are to:

start the formation of the main frame and supply number NCTA of active channels or of channels requested during a frame already established;

control the transmission of flag SOF (if such transmission is up to the module GSOF belongs to);

control the transmission of flag RB.

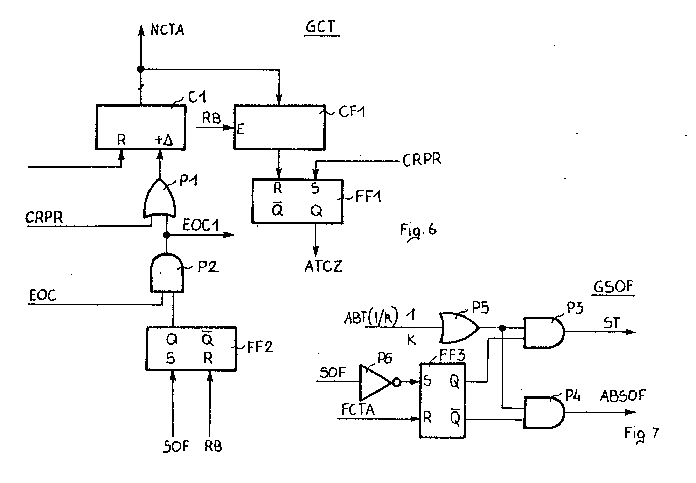

An example of circuit embodiment of these blocks is represented in Figures 6, 7, 8.

Device GS handling the signals necessary to set up circuit channels is subdivided in turn into five blocks GSIM, MUX, GTX, GNCP, GNRA designed respectively to:

supply the commands for the seizure of an available register;

supply the register interested in a communication with the number NC of the channel assigned to that communication; such number NC is either the number ß supplied by LC2, in case of an incoming communication, or the number NCT supplied from GCT, in case of outgoing communication; the commands for sending either number are signals CA, CPT already examined; signal CPT is also transferred to the register and forms signal ITX specializing the register for transmission.

store frame by frame the number of active channels in transmission which are handled by the module GTX belongs to (which number is obtained as a difference between the number of booked and released channels) and supply a signal FCTA enabling the transmission of the last circuit assigned to the module in that frame; such signal can be obtained as terminal count of a counter in which the number of active channels is set at the frame beginning and is reduced by one at each signal ST supplied by GSOF;

render number NCP of the channel seized for the transmission available to LC1 (Figure 3). Such number is number NC stored in the register of GRE assigned to that channel, and updated to take into account the release of preceding channels; it is loaded in GNCP upon command of a signal AR(1/k) present on an output of a register between the acknowledgement of the booking packet transmission and the emission of packet CAR (or the release) and is emitted by GNCP towards LC1 at the end of the frame circuit region;

identify the free register to be seized for transmission or reception and supply number NRA thereof to LCC (Figure 3) for transmission channels and to LC1 for receiving channels; NRA (Figure 4) is obtained by decoding availability or unavailability signals DISP(1/k) emitted by the individual registers of GRE and is emitted in correspondence with a signal CAT generated by GSIM as will be described hereinafter.

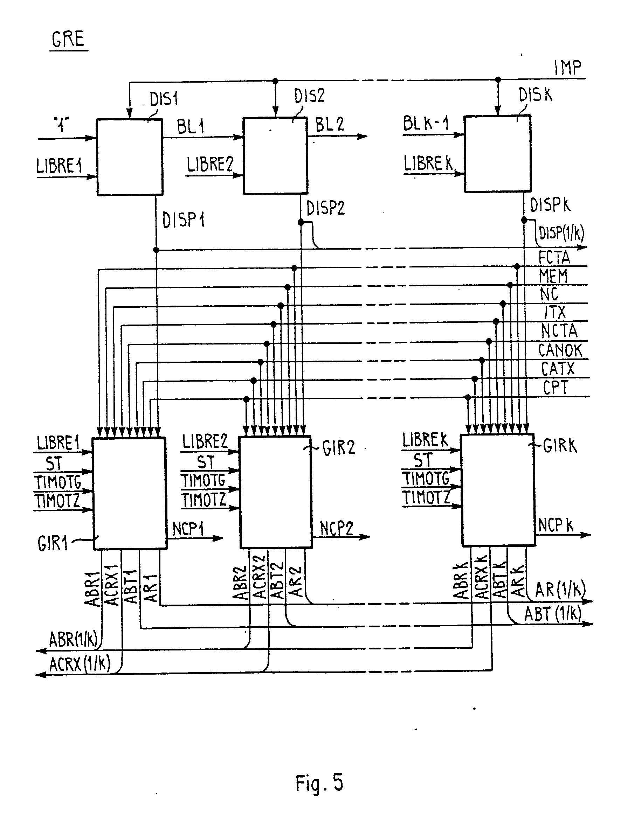

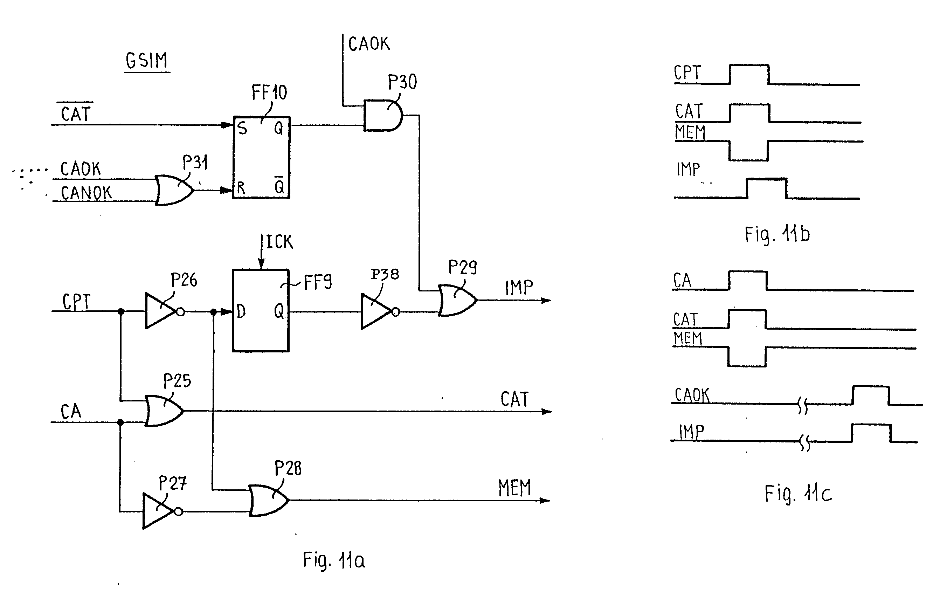

A possible circuit embodiment of block GSIM will be described with reference to Figure 11. The other blocks do not require any description because circuits able to carry out the operations indicated can be easily implemented by the skilled in the art. With reference to Figure 5, each of the k elements composing the bank of registers GRE comprises two parts: the first part DIS-1...DISk is to signal the availability of a register (signal DISP1...DISPk), i.e. the possibility of assigning such a register to a new communication; the second part GIR1...GIRk comprises the devices for the actual channel management, i.e. devices enabling the transmission or reception of information by CH (Figure 3) and storing the channel position in the frame.

As to availability, obviously only a free register can be available: besides, to eliminate the need to search for and choose one of the free registers, only one free register at a time is made available: in particular, at a given instant the free register with the least serial number is made available.

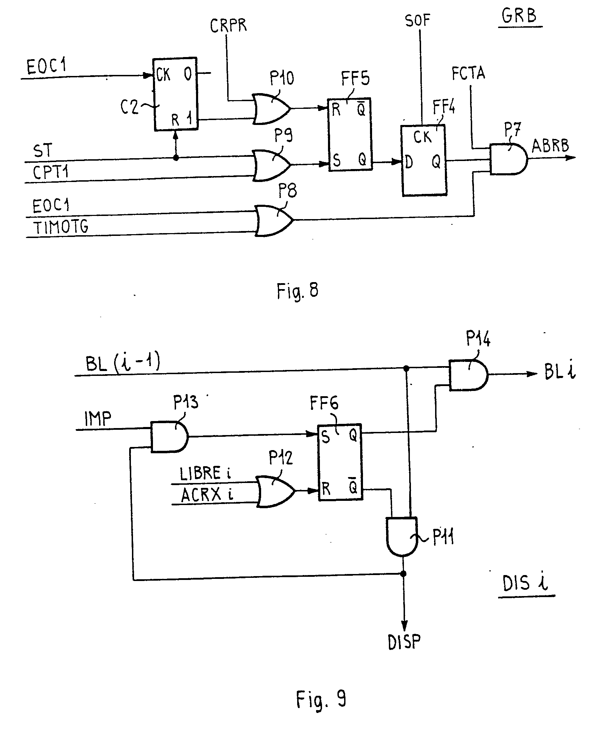

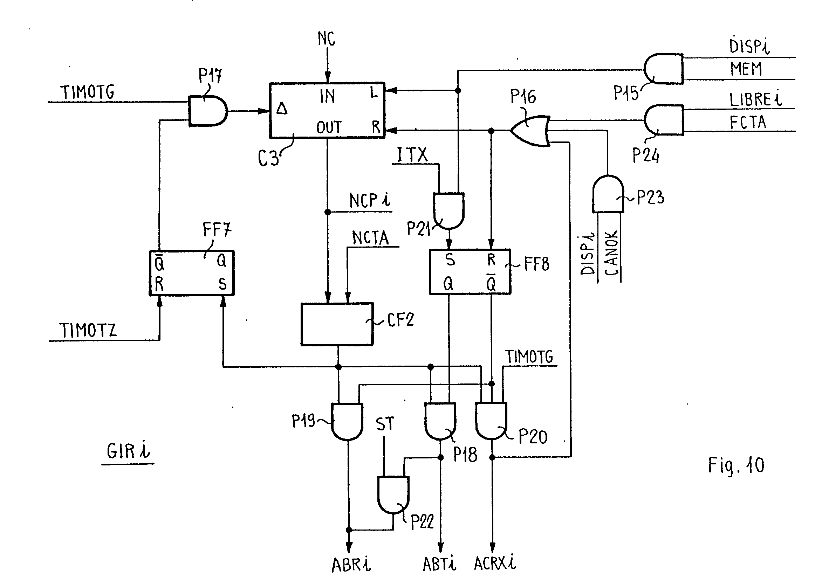

To obtain that, blocks DIS1...DISk are connected in series and a block is enabled only if the preceding block is seized or in general if no preceding block is available. Therefore each block DIS supplies the subsequent block with a signal BL1...BL(k-1) which, when it is 0, disables all subsequent registers. The way in which such signal and the availability signal are generated will be examined with reference to Figure 9 showing a possible embodiment of a block DIS; the signals emitted by blocks GIR will be examined in connection with the circuit description of Figure 10.

With reference to Figure 6, in block GCT a first flip-flop FF1 receives signals CRPR indicating the arrival of the booking packets and generates, in correspondence with the first of said signals, a signal ATCZ enabling GDT (Figure 3); this signal is kept present as long as there are active circuit channels, what is signalled by a comparator CF1.

Signals CRPR are also supplied to a counter C1 through OR gate P1 which receives at a second input signals EOC1 which represent the end-of-carrier signals occurring during the circuit region of the frame. In fact such signals are supplied to P1 through AND gate P2 which receives signals EOC from the bus and is enabled through a flip-flop FF2 by signal SOF and disabled by signal RB. Under these conditions C1 counts the booking packets CRP as long as no frame has been formed, whilst in presence of the frame it counts the active channels in the circuit region and again the booking packets in the packet regions. The current count NCTA is supplied to MUX (Figure 4) and GRE. The final value reached in a frame by NCTA is number NCA of channels waited for in the subsequent frame.

Advantageously C1 (Figure 6) starts counting from a value different from 0 (e.g. from 1), what allows the use of counting value 0 in GRE to signal the free state of registers, as will be disclosed hereinafter; the counter is reset at the end of each frame (signal TIMOTZ). Current count NCTA is also sent to comparator CM1 and compared, at the circuit region end, with the initial count of C1 for resetting FF1 when there are no longer active channels (i.e. when there is no longer the frame).

With reference to Figure 7, block GSOF must enable the emission of flag SOF in correspondence with the first channel in the frame. The first channel will be obviously assigned to transmission and then GSOF is first to receive from GRE (Figure 5) one of the signals ABT(1/k) indicating the enabling of a register to transmission towards the bus. Signals ABT (1/k) arrive at GSOF through OR gate P5. Active signal ABT is supplied to the input of two AND gates P3, P4 having a second input connected to outputs Q, $\overline{Q}$ of a flip-flop FF3.

Output $\overline{Q}$ is active as long as the frame is absent, or, in presence of the frame, starting from the last channel handled by the module GSOF belongs to (signal FCTA). Therefore, for the module to which the first active channel is assigned, the occurrence of a signal ABT enables P4 to emit signal ABSOF which is sent to RTX and then converted into signal SOF.

Recognition of signal SOF coming from bus 1 sets to 1 output Q and resets output $\overline{Q}$ of FF3 in all the modules, through P6.

Immediately after output Q of FF3 has been set, a signal ST is emitted through P3 and is supplied to GRB and GTX to start transmission.

If on the contrary, the frame has already been set up, the module GSOF belongs to is not to emit SOF and the occurrence of a signal ABT causes through P3 the instantaneous emission of signal ST.

With reference to Figure 8, block GRB is to generate a signal ABRB enabling the transmission over the bus of signal RB by devices RTX of the module handling the last channel of the circuit region. This signal ABRB is emitted at the output of AND gate P7 at the end of the transmission of the information carried by the last channel, if a signal generated in the preceding frame is at 1, thereby indicating that the last channel is handled by the module circuit GRB belongs to.

The condition "end of transmission of the last channel of the circuit region" is signalled by the simultaneous occurrence of a signal FCTA (generated by GTX, Figure 4), which enables the transmission of the last channel of the circuit region, and of signal EOC1 (end of carrier relating to the transmission of that channel) or of signal TIMOTG (time Tg over). The last two signals are supplied to P7 through OR gate P8; signal TIMOTG takes into account the possibility of the release of the channel during the frame, what is not to prevent the emission of ABRB.

The flag "module handling the last channel" is stored at the frame beginning (signal SOF) by a D-type flip-flop FF4 and is generated in the preceding frame with the following criterion:

in the circuit region the flag is set to 1 in correspondence with signal ST of transmission beginning generated by GSOF (Figure 7) and is reset when the end of the transmission of a channel relating to a different module is recognized;

in the packet region (or in frame absence) the flag is reset or kept to zero at each booking packet and is set to 1 when the packet sending is acknowledged (this acknowledgement is seen only by the module which has sent the packet).

The flag is present at output Q of a set-reset flip-flop FF5. FF5 is set, through OR gate P9, by signal ST or signal CPT1 (which is signal CPT delayed so as to arrive after the acknowledgement of a booking packet) and is reset, through an OR gate P10, by signal CRPR or by the terminal count of a modulo-2 counter C2, which counts signals EOC1 coming from GCT (Figure 6) and is reset by ST.

It is easy to verify that this circuit arrangement implements the described procedure. More particularly, as far as the circuit region is concerned, it is to be noticed that signals EOC1 relative to the module which is transmitting have no effect, as counter C2 is reset each time by signal ST.

With reference to Figure 9, blocks DIS of the various elements of GRE cooperate to make an only free register at the time available, and to disable all the subsequent registers. A generic block DISi can signal its availability provided it is free (absence of seizure signal IMP) and no block DIS with lower serial number is available (signal BL(i-1) at 1). To this purpose signal BL(i-1) is supplied to an AND gate P11 which emits signal DISP1 when output $\overline{Q}$ of a flip-flop FF6 is 1. Such flip-flop is set through AND gate P13 by seizure signal IMP emitted by GSIM (Figure 4) and is reset, through OR gate P12, by signals LIBREi or ACRXi, emitted by CH (Figure 3) and GIRi (Figure 5) respectively, when the register release is requested. Moreover, output $\overline{Q}$ of FF6 is active from the beginning of the operation of the apparatus till the reception of signal IMP. AND gate P13 is enabled by signal DISPi. Output Q of FF6 is connected to an input of AND gate P14 which receives at a second input signal BL(i-1) and emits signal BLi. Therefore, signal DISPi is emitted if at least one of the preceding registers is not available [BL(i-1)=1] and if the register itself is not seized; under these conditions signal BLi sent to the (i+1)-th register is 0, so that said register is disabled and disables all the subsequent registers.

Seizure signal IMP, which is sent to all registers, can in turn be processed only by the available register.

Figure 10 shows the scheme of block GIRi of the i-th register, under the assumption that such register is the available one.

A counter C3 loads channel number NC, supplied by MUX (Figure 4) when GSIM emits a signal MEM in the way which will be examined hereinafter. The command is transmitted to C3 through AND gate P15, which receives DISPi and MEM. Counter C3 is reset through OR gate P16 when the conditions disclosed hereinafter occur, and is decremented by the output signal of AND gate P17 which receives at an input signal TIMOTG and has another input connected to the complementary output of a flip-flop FF7, reset by signal TIMOTZ.

The updated count is presented at the output of C3 as booked channel number NCP and is supplied also to a comparator CF2 which compares it with current channel number NCTA generated by GNCTA (Figure 4).

The output of CF2 is connected to the set input of flip-flop FF7 as well as to an input of three AND gates P18, P19, P20. Since such an output passes to 1 only when NCTA becomes equal to NCPi, the connection with FF7 allows the value stored in C3 to be decremented during the frame only when NCTA is less than NCPi, i.e. only if a channel preceding that booked for that register has been released; in this case in fact, as already mentioned, the frame is to be compacted again.

The three gates P18, P19, P20 are enabled when CF2 signals the equality between NCTA and NCP (i.e. when the booked channel occur). Gate P18 emits signal ABTi towards GSOF (Figure 7) when output Q of a flip-flop FF8 (Figure 10 is 1; this indicates that a register is used for transmission, as such output passes to 1 at the occurrence of signal ITX emitted by MUX (Figure 4) and fed to the set input of FF8 (Figure 10) through gate P21, enabled by the output signal of P15.

Gate 19 emits a signal ABRi towards LCC (Figure 3), where said signal will be converted into an enabling signal for buffer M1...Mk associated with the i-th register. Such signal is emitted as soon as the booked channel occurs, if the register is seized for reception (i.e. output Q of FF8 is active) or, if the register is seized for transmission, after the emission of ST by GSOF (Figure 7). In the latter case ABRi is present at the output of AND gate P22, which receives at an input signal ST and has the other input connected to the output of P18.

Finally gate P20 emits signal ACRX (release of a channel) towards logic LCC (Figure 3) when the channel is seized for reception and the guard time relating to the channel itself is over (signal TIMOTG).

Signal ACRX is also an input signal of P16 (Figure 10) and can reset C3 and FF8 when the transmission of packet CAR or CAI is not successful (signal CANOK supplied to P16 through AND gate P23 which receives at a second input signal DISPi) or when LCC requests release (signal LIBREi). In the latter case the initial conditions are resumed in correspondence with the last channel handled by the module, as indicated by AND gate P24 which receives signals LIBREi and FCTA.

Block GIRi is also associated with circuits generating signal ARi as already described; yet such circuits are not shown, since their implementation presents no problem to the skilled in the art.

With reference to Figure 11, block GSIM is to generate the three signals CAT, MEM, IMP for GNRA, GIR, DIS respectively.

Signal CAT indicates the setup of a transmitting or receiving channel respectively, and is the output signal of OR gate P25 which receives signals CpT and CA.

Signal MEM causes the loading into the register of number NCTA or β of the channel used for transmission or reception, respectively: this signal is to follow the emission of CAT and then its leading edge can be generated in correspondence with the trailing edges of CPT or CA, as indicated by inverters P26, P27 band OR gate P28.

Signal IMP which causes the definitive seizure of the register is present at the output of OR gate P29. In transmission, signal IMP is represented by signal CPT, fed to P29 through inverter P26, flip-flop FF9 and inverter P38; during reception, signal IMP is transmitted upon the acknowledgement of the successful transmission of packets CAR/CAI and is obtained from signal CAT, which is supplied to P29 through a flip-flop FF10 and AND gate P30, enabled by CAOK. Flip-flop FF10 is then reset at the end of the transmission of CAR/CAI, independently of the transmission result. This is shown by OR gate P31, which has the output connected to the reset input of FF10 and receives at the input signals CAOK, CANOK.

Signals CAT, MEM, IMP are shown in Figures 11b, 11c, for transmission and reception respectively.

With reference to Figure 12, decoder GDT, sends signals TIMOTZ and TIMOTG to the circuits of CSRH to signal the end of time Z (frame duration) and of guard time Tg; GDT gets resynchronized at each frame in order take into account the possible release of the first channel(s).

The circuit basically consists of two counters C6, C7 which emit signals TIMOTZ, TIMOTG when they have counted a predeterminal number of pulses of an internal clock signal ICK. Counter C6 is kept to 0 through inverter P36 and gate OR P32 till the beginning of the formation of the hybrid frame on the bus, i.e. till the emission of signal ATCZ by GCT (Figure 6); when such signal arrives, C6 counts the pulses of ICK, which it receives through AND gate P31. Once the frame is formed C6 is reset at each new frame by signal SOF, supplied through a second input of P32. In this way frame duration Z is computed every time when the frame beginning is actually detected.

Counter C7 starts counting the pulses of ICK, either after time Z is over (for the first channel of the frame) or after the occurrence of EOC1 (i.e. upon recognition of the end-of-carrier signals relating to the channels of the circuit region) and stops counting when the beginning-of-counter BOC or flag RB of end of circuit region are recognized. To this aim, signals ICK are supplied to C7 through AND gate P33 enabled by the signal present at output Q of a flip-flop FF11 which has output $\overline{Q}$ connected to the reset input of C7 and which is set, through OR gate P34, by signals TIMOTZ or EOC1, and is reset through OR gate P35 by signals BOC or RB.

The operation of the apparatus for circuit-switched communications management will now be described. The operation for packet-switched communication is quite conventional, once the bus access protocol has been determined. However, as the signalling of circuit-switched communications takes place in packet form, some packet processing will also become apparent from the following description. To make the description easier, the operations carried out by PSH, CH, PSRH, which are shown by flow charts, will be separately described. The operations of CSRH will only be summarized, since the operation of the individual components thereof has already been described in detail.

1) Block PSH

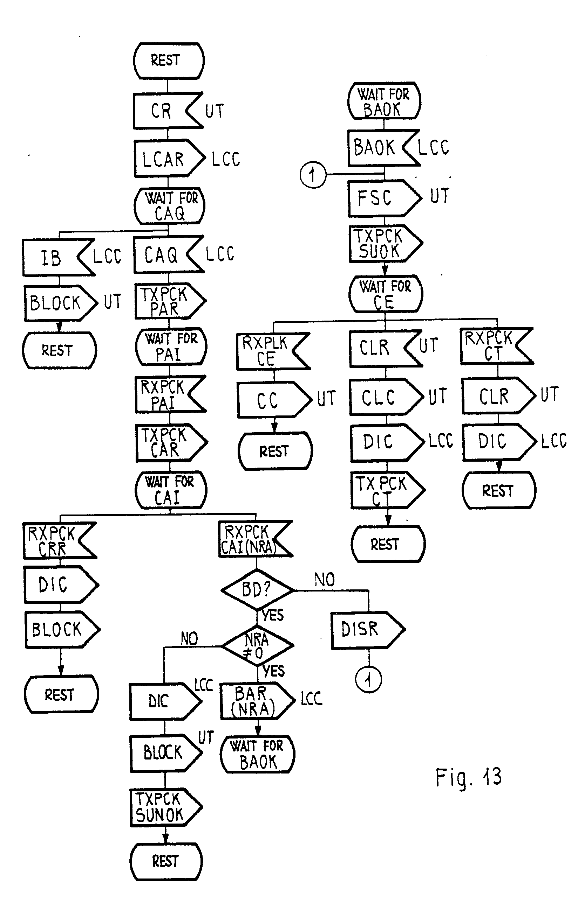

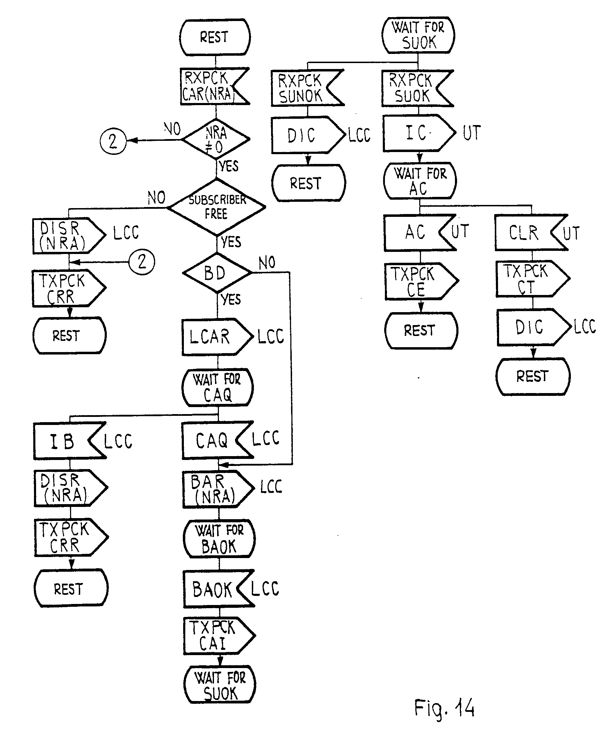

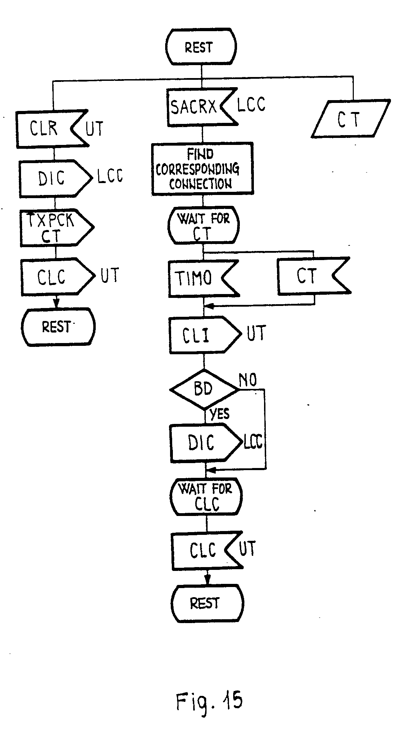

The operations carried out by PSH are represented in Figures 13, 14 for the set up of the connections relating to an outgoing or an incoming call, respectively, and in Figure 15 for the release.

In case of an outgoing call, block PSH is activated by request CR sent by subscriber UT; upon receipt of such a request, PSH sends logic LCC in CH (Figure 3) a request LCAR for channel acquisition, together with the information on the band necessary to the communication. LCC (Figure 3) checks the possibility of setting up the channel with the requested characteristics, as will be described hereinafter. As a result of the operations carried out by LCC, PSH receives a "block" signal IB if the channel is not available, or the acknowledgement CAQ of the channel acquisition.

In the case of block, the situation is communicated to the subscriber (BLOCK) and PSH returns to rest condition. If the channel is available, PSH transmits a packet PAR (TXPCK, PAR) through PSRH to nodal module MN (Figure 1) to request the information necessary to reach the called subscriber. Once received said information through packet PAI (RXPCK PAI), PSH commands PSRH to transmit a packet CAR (TXPCK CAR) in order to inform the called subscriber that he is to set up a receiving channel, and waits for packet CAI by which the called subscriber communicates that he accepts the call and in which there is the number NRA of the possible register of CSRH temporarily assigned in the interface to receiving operations. In case the called subscriber has not accepted the call, he sends a packet CRR to PSH (RXPCK CRR) to signal the impossibility of establishing a connection.

This fact is communicated both to LCC through a signal DIC, by which the release of the temporarily seized channel is requested, and to the calling subscriber (BLOCK); subsequently PSH returns to rest conditions. If the called subscriber has accepted the call, PSH, once received packet CAI, checks whether the communication is bidirectional. In the affirmative, PSH checks whether number NRA is different from zero. If NRA=0 (i.e. if no register is available at the called subscriber) PSH operates as in the case of refused call; moreover it causes a packet to be sent to the called subscriber to signal the connection impossibility (TXPCK SUNOK).

If NRA is different from 0, PSH requires LCC, through a signal BAR, to seize buffer M1...Mk (Figure 3) corresponding to the register indicated by NRA and waits for the acknowledgement BAOK (Figure 13). When BAOK arrives, PSH signals that the connection has been established to both the calling and the called subscriber (FSC, TXPCK SUOK). The operations relevant to both the check of the availability of a register for the reception (NRA≠0) and the sending of signal BAR are obviously unnecessary if the communication is not bidirectional; in this case logic PSH causes the release of the register temporarily seized and then sends signal FSC and packet SUOK. Logic PSH then waits for an acknowledgement CE by the called party.

If CE arrives, the calling subscriber is informed by a signal CC and the procedure for establishing the connection is over. Instead of packet CE, a release request (CLR, RXPCK CT) can arrive from the calling or the called party, respectively.

In the first case the receipt of the release request is acknowledged to the calling party (CLC), the release of the seized devices (DIC) is requested, the called party is informed of the call end (TXPCK CT) and the rest condition is recovered. In the second case, the release is requested to the calling party (CLR) and signal DIC is sent to LCC, whereafter the rest condition is resumed. As to the incoming call (Figure 14) device PSH of the called party is activated when it receives packet CAR containing the number NRA of an available register, if any, which is temporarily seized. If the called party has no available registers for the communication (NRA=0), the already-defined packet CRR is transmitted (TXPCK CRR) to the called party, and the rest conditions are resumed.

In case of available channels, PSH checks whether the subscriber is free; in the negative, it asks through LCC the release of the register (signal DISR (NRA)) and sends packet CRR as before. If on the contrary the subscriber is free and the communication is bidirectional, signal LCAR is sent to LCC and the block signal IB or the channel acquisition acknowledgement CAQ are waited for as a reply (wait CAQ).

As to the release (Figure 15) there are no differences between calling and called subscriber; each subscriber releases the transmitting channel, while for the receiving channel the release is automatically started because the information carried by the channel does not arrive within time Tg.

To release the transmission channel, block PSH receives from the subscriber release signalling CLR which is handled as already described in Figure 14; in addition the release is acknowledged to the subscriber.

The release of the receiving channel is handled by CSRH and LCC as will be described hereinafter. Block PSH is informed by LCC through a signal SACRX; once retrieved the connection to which the release request refers to, information CT (compare Figure 13) is waited for and, when it arrives, or after a pre-determined time (TIMO), the subscriber is informed of the release (CL1).

If the channel is bidirectional, LCC is requested to release the devices seized for the transmission (DIC) and when the subscriber acknowledges the release (CLC) the rest condition is recovered. If the channel is monodirectional the release of the transmitting channel is obviously unnecessary.

2) Logic LCC

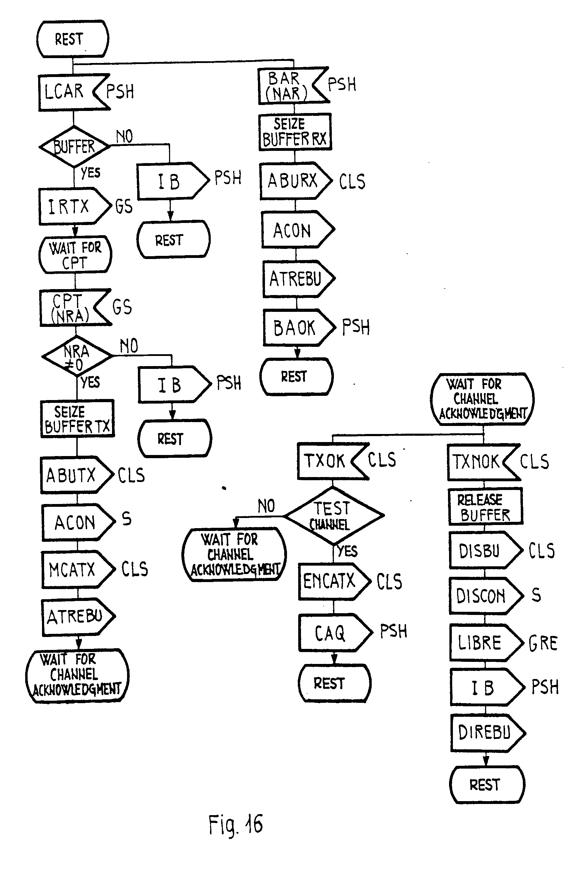

As to activation of circuit channels reference is made to Figure 16.

Logic LCC is requested to intervene by PSH through signals LCAR in case of transmission or BAR(NRA) in case of reception.

Considering first the transmission, LCC checks whether there are available buffers (BUFFER); in the negative it sends to PSH block signal IB (Figure 14), recovering the rest condition; in the affirmative it supplies GS with signal IRTX to make CSRH request the transmission of the booking packet, afterwards LCC waits from GS the acknowledgement CPT of the transmission of such a packet (CPT) together with number NRA of the available register. If no register is available (NRA=0), block signal IB is sent to PSH.

If there are registers (NRA≠0), LCC: seizes the corresponding buffer for the transmission (ABUTX), predisposing the length of the information block required by said communication; connects the buffer with the subscriber's line (ACON) through matrix S (Figure 3); enables controller CLS of the seized buffer to check the band availability on the bus (signal MCATX) and connects the buffer with the register (ATREBU). Afterwards LCC waits for the reception of the check result from CLS (wait for channel acknowledgement).

The result is taken as favourable if the information block of the required length could have been transmitted in two successive frames; this is necessary, when the band assigned to a channel varies from frame to frame, in order to take into account oscillations of the available band on the bus due to transient phenomena, originating from the release of initial frame channels. Of course, if the band is fixed, the availability test can be effected in an only frame.

When the information block has been transmitted (TXOK) and the test is over, LCC supplies CLS with end-of-test signal ENCATX and confirms the availability to PSH with CAQ; if after the signal TXOK the test was not yet finished, the result is waited for as before.

In case of no band availability on the bus (TXNOK), LCC releases the bufer by sending signal DISBU to CLS, causes disconnection of buffer from subscriber's line (DISCON) and from register (DIREBU) sends signal LIBRE to GRE to release the register previously seized and signals the block to PSH (IB), returning then to rest conditions.

To set up a receiving channel, LCC, once received signal BAR from PSH, seizes the buffer for reception (ABURX), associates the buffer with the subscriber and the register (ACON, ATREBU) and acknowledges the setup to PSH (BAOK) returning then to rest conditions.

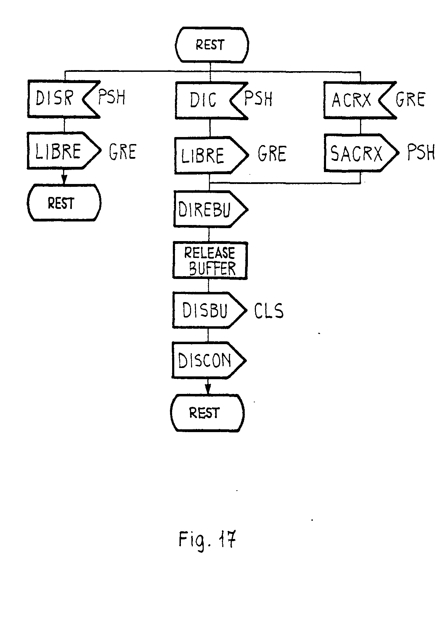

Release (Figure 17) can be controlled either by signals DISR, DIC coming from PSH, or by a request for the release of a reception channel (ACRX) coming from GRE.

The conditions which cause the emission of DISR and DIC have already been examined in the preceding diagrams.

The arrival of DISR causes only the emission of signal LIBRE towards the register temporarily seized and the return of LCC to the rest conditions. The arrival of DIC and ACRX starts basically the same operations already examined for the lack of availability during the setup the emission of block signal excepted; besides, in case the release is requested by GRE (signal ACRX), signal SACRX is emitted towards PSH instead of signal LIBRE.

### 3) Logic AA

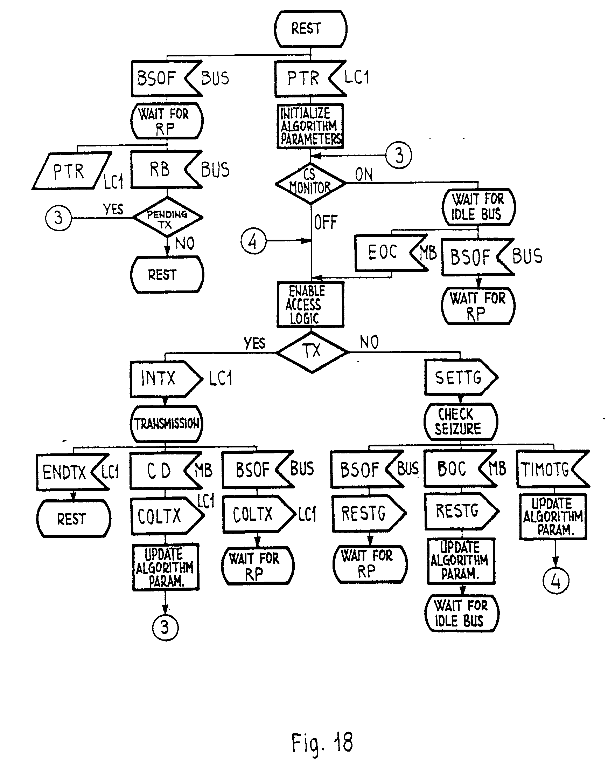

Reference is made to Figure 18, which for generality reasons depicts the operations carried out by AA when the frame is already formed; such operations are the same for both data packets and signalling packets of circuit communications.

AA is to attempt the access to the bus only in the packet region of the frame and is to interrupt the activity as soon as the circuit region begins. To this aim AA detects the beginning BSOF of signal SOF, which, as mentioned, has such a duration that it allows packet activity interruption without collision with the channels in the circuit region.

Therefore, at the arrival of BSOF, AA must wait for the beginning of the packet region (WAIT for RP) signalled by RB; possible access requests (PTR), sent by LC1 and occurring before RB, are handled only after such signal has arrived. Once the packet region is begun, AA checks whether any transmission has been left incomplete in the preceding frame; in the negative it returns to rest conditions waiting for access requests PTR, in the affirmative, it begins to check the transmission possiblity on the bus by using the same parameters of the access algorithm already used for the transmission interrupted.

At the arrival of new packet transmission requests, AA initializes the algorithm parameters and checks the transmission possibility. To this aim, AA must first check whether the bus is free (CS monitor). If signal CS supplied by MB (Figure 1) indicates that the bus is free (OFF), the access logic is enabled (protocol managing logic). If the bus is busy (ON), AA waits for a free interval (wait for free bus) and when this occurs (signal EOC supplied by MB and indicating the end-of-carrier), it enables the access logic; while AA is waiting the packet region can obviously finish (BSOF), in what case the operations described for the case in which signal BSOF precedes the bus access request PTR are repeated.

The access logic is to decide whether or not to try the transmission on the basis of the chosen protocol (TX). If it decides to try the transmission, AA communicates the decision to LC1 through signal INTX which makes LC1 command the packet transmission, and waits for the transmission result.

In case of successful transmission (signal ENDTX supplied by LC1) AA recovers the rest condition waiting for the subsequent request; in case of unfavourable result due to collision (signal CD supplied by MB), it signals the collision itself to LC1 (COLTX), updates the algorithm parameters and repeats the operations described starting from the check on the transmission possibility.

Obviously the transmission may be unsuccessful owing to the arrival of BSOF; even in this case the event is signalled to LC1 by signal COLTX and the frame packet region is waited for.

If on the contrary the access logic decides not to attempt the transmission, a guard-time equal to Tg (SETTG) is started during which time:

the circuit region (BSOF) can begin, thereby stopping the count of Tg (RESTG) while waiting for the packet region;

signal BOC can occur indicating bus occupation; even in this case the counting of TG is stopped and after updating the algorithm parameters a free interval is again waited for.

If on the contrary time Tg elapses (TIMOTG), the algorithm parameters are updated and the operations are resumed starting from the enabling of the access logic.

### 4) Logic LC1

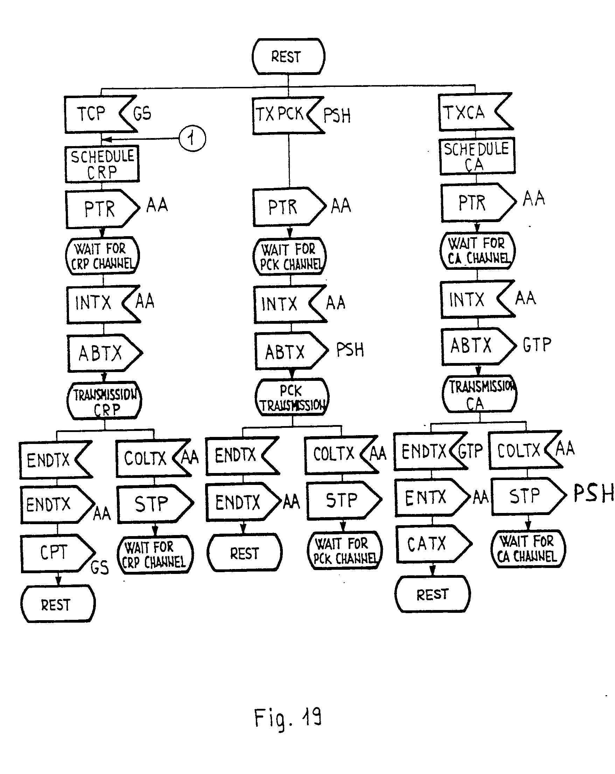

Logic LC1 manages the operations relating to the actual packet transmission with the modalities shown in Figure 19. Three cases are possible.

1) the packet is a generic data or signalling packet which requires no processing by PSRH,

2) the packet is a booking packet CRP (which as mentioned is generated in PSRH),

3) the packet is a packet CAR (or CAI) which demands processing in PSRH.

In case of a generic packet, LC1 is informed by GS that a packet is to be transmitted (TXPCK), requests AA the access (PTR) and waits for AA to communicate the possibility of transmission (wait for channel PCK). Here only the case is considered in which the access is possible. When LC1 receives signal INTX from AA, it requests PSH to forward B1 the packet (ABTX) and forwards it from B1 onto the bus (transmission PCK). If the packet has been correctly transmitted from PSH to B1 and from B1 to the bus, the end of transmission is signalled from PSH to LC1 and from LC1 to AA (incoming and outgoing signals ENDTX); afterwards LC1 returns to rest conditions. If the packet has given rise to collision (COLTX), PSH is requested to interrupt transmission (STP) and transmission possibility is waited for again.

In case of booking packet, LC1 receives from GS the forward request TCP; under these conditions it predisposes MX1 to let through such a packet (SCHEDULE CRP). The subsequent operations, from the request PTR of access to the bus until the transmission end are analogous to those of a generic packet, except that the packet sending request ABTX, the command STP of interrupting the transmission in case of collision and the end of transmission signal incoming to LC1 are exchanged with the devices in which packet CRP is prepared and not with PSH; besides, in case of successful transmission, acknowledgement CPT of occurred transmission is sent.

In case of packets CAR/CAI, once received the information (TXCA) that the packet is ready in PSH, LC1 positions MX1 so as to insert number NCP into the packet (SCHEDULE CA) and the operations go on as before.

5) Logic LC2

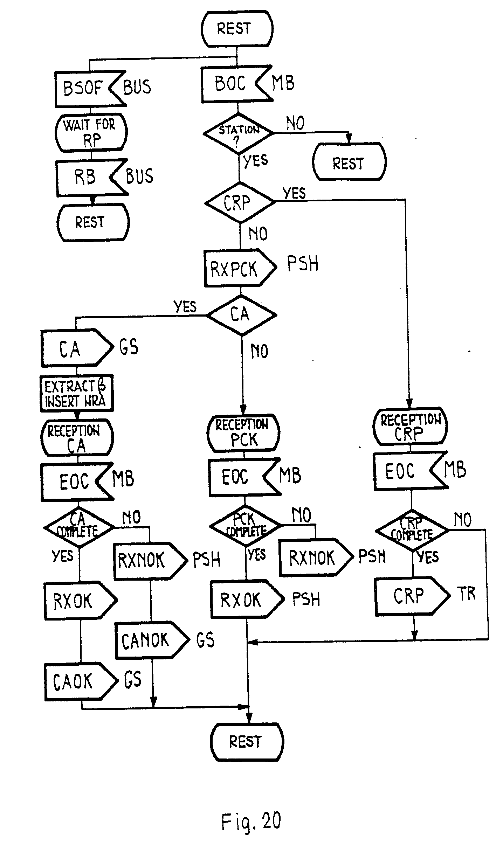

The reception of packets from the bus is controlled by LC2 as shown in Figure 20. Like the access to the bus in transmission, in case of already formed frame the reception is possible only in the packet region. Then, whenever the circuit region begins (BSOF), LC2 passes to a state of wait for RP and when the packet region begins (RB), it recovers a rest condition waiting for the arrival of a packet, signalled by the beginning of the carrier (BOC). If the packet is not addressed to the station LC2 belongs to, LC2 returns to rest condition, otherwise it checks whether the packets are booking packets CRP or packets CAR, CAI. The checks (blocks "STATION" "CRP", "CA") are effected by RC (Figure 3) which in the affirmative sends LC2 signals ADR, CRPR, CA; however for simplicity sake, it was preferred to insert into the diagram the checks instead of the reception of signals emitted by RC.

Taking this into account, if the received packet is a booking packet CRP, it is not to be forwarded towards PSH. Under these conditions the writing in B2 is enabled (RECEPTION CRP) and at the end of a packet (signal EOC supplied by MB) a check is effected on whether the packet has been correctly received (CRP COMPLETED). In the affirmative, an acknowledgement is given (CRPR) to TR in CSRH and the rest condition is recovered; in the negative the rest condition is immediately recovered and the packet is not considered.

If the packet is not a booking packet, its arrival is signalled to PSH (RXPCK) and or check is made on whether such packet is a packet CAR or CAI which demands processing in PSRH. In the negative (generic data or signalling packet), the packet is stored in B2, Figure 3 (RECEPTION PCK), and at the end of the packet (EOC) its completeness is checked (PCK completed) and the correct (RXOK) or incorrect (RXNOK) reception is signalled to PSH; in case of correct reception the rest condition is resumed.

In case of a packet CAR or CAI, LC2 predisposes MX2 so as to extract number $\beta$ and insert number NRA (EXTRACT $\beta$, INSERT NRA), and the packet is stored into B2 (RECEPTION CA).

At the end of reception (EOC), the completion is checked (CA completed), the correct (RXOK, CAOK) or incorrect (RXNOK, CANOK) packet reception is signalled to PSH and CS and the rest conditions are resumed.

Now the operations carried out by the devices of CSRH to establish or release a connection will be summarized, considering first an outgoing channel and then an incoming channel.

As a first operation, CSRH is made to intervene by signal IRTX which causes the emission towards LC1 of the request TCP of booking packet transmission. After GSIM and MUX (Figure 4) have received the acknowledgement CPT of such transmission, the available register loads (counter C3 of block GIR, Figure 10), in correspondence with signal MEM emitted by GSIM, number NCTA of the channel assigned to that transmission and it is seized for the transmission (signal IMP emitted by GSIM, Figure 4), passing to the busy condition. The booking acknowledgement is communicated to LCC (Figure 3) together with number NRA of the seized register. Besides, the number of the channel assigned to the communication is made available for LC1 as signal NCP, until the correct transmission of packet CAR. From the frame subsequent to that in which the seizure has taken place, in correspondence with the channel stored in C3 (the number of which may be updated by C3 to take into account the release of preceding channels), GIR (Figure 5) enables LCC (Figure 3), through signal ABR, to control the reading of an information block relevant to the communication in the suitable buffer M1...Mk. Such information block will have no information content until all the checks on the possibility of establishing the communication with the wished characteristics have been carried out.

During reception, the seizure of an available register takes place as soon as GSIM (Figure 4) receives signal CA indicating the arrival of a packet CAR (at the called party) or CAI (at the calling party). The number $\beta$ extracted from the arrival packet is loaded into the available register and the indication NRA of the register in which such number has been stored is supplied; the seizure becomes definitive when the correct packet reception is acknowledged, otherwise the register is released. From the subsequent frame on, LCC (Figure 3) is enabled through ABR to cause storage of the information in the buffer connected to the register, each time the channel assigned to the communication occurs.

The release of a transmitting channel at the end of the communication is controlled by signal LIBRE coming from LCC and relevant to the seized register: this signal, as described in connection with Figure 10, resets C3 and releases the register, starting again the algorithm which determines the availability.

For a receiving channel, the release is automatic when, in correspondence with the channel waited for, the activity on the bus is missing for a time higher than guard time Tg. At the end of transmission of the last channel handled by the module involved, signal ACRX is sent towards LCC (Figure 3) which releases the buffer as described. In this case too, the register availability is again updated.

If a trunk module which handles hybrid or synchronous frames is considered instead of a subscriber's module, the operations inside the module are perfectly analogous.

Only the structure of PSH and the dialog of CH with the external devices are to be changed, to take into account the characteristics of the external network. Besides, the nodal module will contain information on the routing towards the trunks and not towards the subscribers.

Preceding circuit and operation description is based on the assumptions that the channels have constant band for the whole duration of the communication and the frames have constant duration. As stated, the invention is generally applied also to the case of variable band channels and variable-duration frames.

The modifications necessary in case the band-variability is required only by speech-communications are depicted by way of example.

The activity of a speech source is known to be characterized by the alternance of talkspurts, having an average duration of about 1.3s, and silences, having an average duration of about 1.6s. The communication may then be assigned a channel with suitable bandwith (which for simplicity sake may be considered equal for all speech communications) only during talkspurts, while no channel is assigned during silences. In other words, techniques similar to the TASI already used in the classical telephony to the better exploitation of high-cost transmission lines may be used in hybrid-frame switching. The dynamic management of speech communications is to be carried out so as to reduce to the minimum auxiliary control signallings (which may be represented by flags Hp, Hep, Hpe indicating silence periods and talkspurt-to-silence and silence-to-talkspurt transitions in a channel), and not to interfere with other circuit switched communications not involved in the dynamic management; the latter communications must still dispose of their channels for the whole duration of the communication. The alternance of talkspurts and silences does not affect the procedures of setup and release of a channel for a speech communication, while for an ongoing communication the channel release during silences is to be avoided and the possibility of resuming the communication in correspondence with the subsequent emission is to be checked. During silences and in correspondence with silence-to-talkspurt transition, only flags Hp, Hpe will be transmitted while in correspondence with talkspurt-to-silence transition both the remaining part of the information block and flag Hep will be transmitted.

The lack of activity due to a silence will cause the compaction of circuit region exactly alike the release, but no channel renumbering.

The band left temporarily free can be occupied by other communications, which, owing to circuit-region compaction, will be assigned new channels. For that reason, in correspondence with silence-to-talkspurt transitions, the band necessary to resume transmission may be unavailable: in that case the subscriber's information gets lost (or is to be stored into a buffer memory up to a maximum time beyond which there is anyway a loss). Non availability of a circuit can also last a plurality of frames depending on the instantaneous traffic.

The possible information loss in this case, like in TASI systems, is concentrated in the initial part of the talkspurt and is uniformly distributed among all the ongoing speech communications.

Obviously, a buffer memory system is to be provided in order to limit oscillations in the duration of the time intervals separating two successive information blocks relating to the same channel, which oscillations are just due to the alternance of silences and talkspurts.

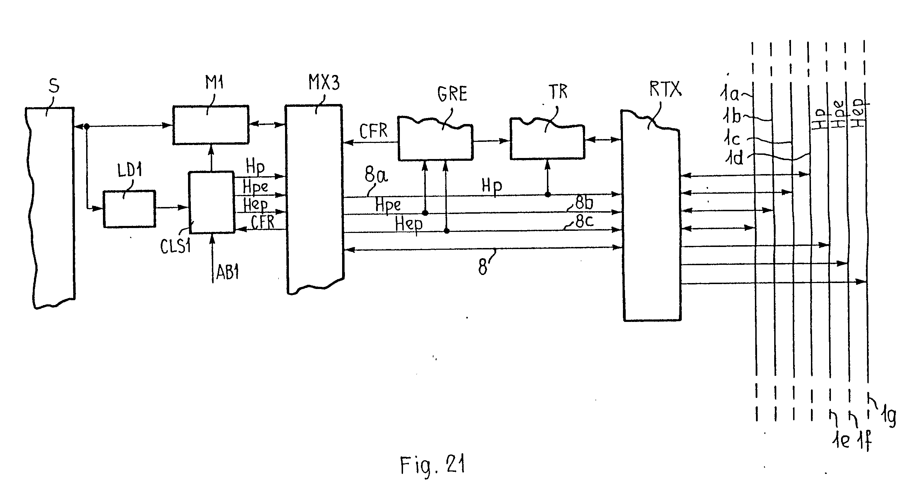

To take into account these modifications, the scheme of Figure 3 becomes as shown in Figure 21, which refers to the most interesting case, in which the silence suppression takes place in the node.

For simplicity sake, only one of buffers M1...Mk, e.g. M1, and only the signals of interest for the modification are shown A device LD is provided between matrix S and the buffer to detect the average level of the speech signal at the buffer input, e.g. during a period corresponding to duration Z of a frame.

Obviously LD is active only for buffers assigned to transmission towards the bus, and supplies the buffer controller with signals indicating the communication conditions (silence, talkspurt, silence-to-talkspurt transition and vice versa) to enable storage in M1, if necessary.

CLS1, upon receiving signal AB1, causes in turn the emission of the contents of M1 in alternative or in addition to flags Hp, Hpe, Hep, which are forwarded through the homonymous wires towards RTX and therefrom towards three additional wires 1e, 1f, 1g of bus 1 designed to convey said flags. As for the input-output wires of buffers M1...Mk, even the terns of wires outgoing from all the controllers will be concentrated into an only term (8a, 8b, 8c) by MX3. Flags Hp, Hpe, Hep are also sent to CSRH; more particularly, the silence flag is sent to GCT (in particular to gate P1, Figure 6) to keep the corresponding channel active; the transitions are communicated e.g. to a circuit VD, associated with each register, which, in correspondence with the silence-to-talkspurt transitions, is to signal CLS the possibility of resuming the transmission (i.e. the band availability on the bus) and predisposes CLS to send the memory contents or the "silence" flag over the line.

Under the hypothesis made that all speech channels require the same band during talkspurts, this availablity signal can be generated by counting the number of speech channels which can be allocated in the band occupied by the packet region in the frame, if such region exists.

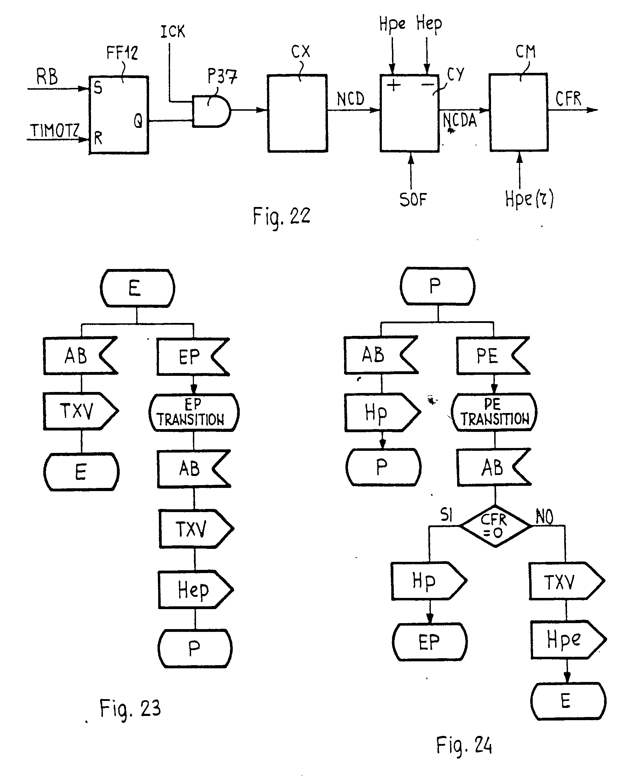

A possible implemention of VD is represented in Figure 22; a counting system CX counts the pulses of the internal clock signal ICK occurring in the frame packet region (identified by signals RB and TIMOTZ which through a flip-flop FF12 enable or disable AND gate P37 which supplies signal ICK to CX) and emits a signal NCD indicating the number of speech channels which can be transmitted during such time.

At the arrival of signal SOF of the subsequent frame, value NCD is loaded into another counter CD and is increased or reduced by a unit by talkspurt-to-silence or silence-to-talkspurt transitions, respectively, detected on the bus. Upon occurrence of transition Hpe(r) relevant to the register with which the circuit is associated, the value NCDA reached is compared with 0 in a comparator CM which emits signal CFR relevant to this register if said value is not 0.

The channel release in the periods corresponding to silences can be easily prevented by sending GCT the silence flag detected from wire 1e to increment counter C1 (Figure 6) which generates the current number of active channels.

The diagram of the operations carried out by CLS for speech channel control is shown in Figures 23 and 24. Considering first the talkspurt state (E), Figure 23, at the arrival of enabling signal AB from LCC, the buffer is read (TXV) and the logic remains in state E. When the signal indicating the talkspurt-to-silence transition arrives from LD, CLS passes to a transition state EP, and upon the arrival of enabling signal AB, the possible remaining portion of the information (TXV) and transition flag Hep are sent and CLS passes to silence state P.

For all the frames in which the silence lasts (Figure 24), in correspondence with the enabling supplied by LCC, only silence flag Hp is transmitted. When the silence-to-talkspurt transition is signalled (PE), CLS passes into a transition state PE and the logic value of signal CFR is checked in correspondence with the enabling by LCC: if CFR=0, only silence flag Hp is emitted and the transition state (PE) is maintained; if, on the contrary, CFR≠0 the reading in memory (TXV) is enabled, signal Hpe is emitted and state E is reached.

If silence suppression takes place already at the subscriber's level, the procedure is perfectly similar, except that the signalling on the source state is sent by the subscriber itself and devices LD are no longer needed.

## Claims

1. Variable-band distributed switching node for an integrated services network, where packet-switched and circuit-switched communications are transmitted, the node comprising a plurality of independent modules (MU1...MUn, MG1...MGm) connected on one side to lines (u₁...uₙ, g₁...gₘ) for connection to subscribers or other nodes and on the other side to a common bus (1) by which the information is rendered available for all the modules and on which, in presence of both types of communications, the corresponding information is organized in hybrid frames subdivided into two regions assigned to circuit-switched communications (circuit region) and to packet-switched communications and to the signalling of circuit-switched communications (packet region), which regions are subdivided into a plurality of channels each assigned to one communication direction, characterized in that each said module (MU1...MGm) comprises two parts, of which the first part (IU, HL, SL, PL) handles the line information and is specialized on the ground of the characteristics of the lines (u₁...gₘ) while the second part (IB) forms an interface between the module (MU1...MGₘ) and the bus, is identical for all the modules and cooperates with the interfaces (IB) of all the other modules to form on the bus and dynamically manage said hybrid frames, so that each channel of the circuit region is assigned a band on the bus which can vary frame by frame according to the instant requirements of the communication the channel is associated with and so that the information carried by all active channels in a given frame are transmitted one after the other, interspaced only by a guard time, said dynamic management being obtained in each interface (IB) by storing, upon the booking of a circuit communication the number of the channel assigned to each communication direction, by updating such number on the basis of the release of the preceding channels and by comparing the number thus updated with the number of the current channel, the positive comparison result enabling the transmission or the reception of the information by the devices handling the line information.

2. Node according to Claim 1, characterized in that said first part of the module comprises devices (PSH) managing and processing the packet-switched information flow and the signalling of the circuit-switched communications and devices (CH) processing the information flow relating to circuit-switched communications, the latter devices comprising:

a bank of buffers (M1...Mk), in which each buffer temporarily stores an information flow directed to or coming from the bus (1), and is associated with a controller (CLS1...CLSk) controlling the reading and writing operatins, the controllers of the buffers (M1...Mk) for the information flows directed to the bus (1) causing the reading in the buffers so that at each frame an information block corresponding to the band requested in that frame is forwarded towards the bus (1);

a control logic (LCC) which exchanges with the devices (PSH) managing a packet communications and signalling and/or with the bus interface devices (IB) the information necessary to the control of circuit communications, predisposes on the basis of said information the controllers (CLS1...CLSk) to handle an information flow directed to or coming from the bus (1) and to transmit towards the bus the information block corresponding to the requested band, and enables said controllers to cause the reading from or the writing into the buffer of the information flow directed to or coming from the bus, in correspondence with the channel assigned to such flow.

3. Node according to Claim 2, characterized in that said interface (IB) comprises devices (PSRH) for managing the packet region in the frame and devices (CSRH) for the dynamic frame management and for the access to the bus for reception-transmission of the information carried by the channels of the circuit region, said devices being interconnected for the exchange of signals relating to the management of said channels and being connected to the devices (PSH) handling the packet-switched information flow and to the devices (CH) handling the circuit-switched information flow, and a device (MB) monitoring the activity on the bus (1) and supplying the information on said activity to the other devices of the interface (IB).

4. Node according to Claim 3, characterized in that the devices (PSRH) managing the packet region comprise: means (RC) which recognize, in a packet flow arriving from the bus, signalling packets relevant to circuit-switched communications and containing control information demanding a real-time processing in the interface (IB), and which signal the arrival thereof to the devices (CSRH) for the dynamic management of the hybrid frame; means (MX2) extracting from said packets and supplying to the devices (CSRH) for dynamic frame management said control information and replacing it with other control information, which is supplied by the devices for the dynamic frame management and is to be sent to the first part of the module; and means (MX1) for inserting into suitable signalling packets, to be forwarded on the bus, further control information, also supplied by the devices for dynamic frame management.

5. Node according to Claim 3 or 4, characterized in that the devices (CSRH) for the dynamic frame management comprise:

a first logic network (GRE), comprising as many identical elements (hereinafter referred to as registers) as the buffers (M1...Mk) are, each register comprising means (DIS1...DISk) controlling the availability of the free registers, and means (GIR1...GIRk) storing the number of the channel associated to the register and generating the signals enabling transmission and reception;

a second logic network (GS) processing the signals relating to registers and channels and comprising: means (GSIM) generating the seizure signals for an available register, on the basis of the acknowledgement of the transmission of a booking packet, in case of seizure for transmission and on the basis of the recognition of one of said signalling packets, in case of seizure for reception; means (MUX) supplying a register with the number of the channel allotted to a communication, said number being extracted from said signalling packet, for the reception, or being the number of the current channel, for the transmission; means (GTX) storing frame by frame the number of active channels handled by the module they belong to, and signalling that the transmission of the last of said channels is enabled; means (GNCP) making available to the devices (PSRH) for packet region management the number, continuously updated by said first logic network (GRE), of the channel seized for the transmission, which number is to be inserted into suitable signalling packets to be forwarded onto the bus; means (GNRA) supplying the number of the seized channel to said control logic (LCC) during transmission, and to said devices (PSH) managing the packet region during reception, for the insertion thereof into suitable signalling packets to be forwarded to the first part of the module;

a third logic network (GDT) for the generation of timing signals indicating that a maximum frame duration time and a maximum separation time between contiguous active channels are over;

a fourth logic network (TR) for frame formation and maintenance, comprising means (GCT) starting the operations of frame formation and supplying the number of the current channel within a frame already formed; means (GSOF) enabling, in the module handling the first active channel of a frame, the generation of a start-of frame signal (SOF); and means (GRB) enabling the generation of a signal indicating the end of the circuit region in the module handling the last active channel of the circuit region.

6. Node according to any preceding claim, characterized in that said dynamic management of the hybrid frame concerns only the channels associated with the information flows originated by sources in which the activity periods are characterized by an alternance of talkspurts and silences.

7. Node according to Claim 6, characterized in that the devices (CH) processing the information flow comprise means (LD) detecting the talkspurt or silence states or the transitions from one state to another, and enabling the controllers of buffers (M1...Mk) to forward a state or transition signalling towards the bus, in alternative or in addition to an information block, depending on the flow state.

8. Node according to Claims 6 or 7, characterized in that the devices (CSRH) for dynamic frame management comprise means (VD) which, for each register, check the possibility of resuming the transmission whenever a silence-to-talkspurt transition occurs in the channel associated with said register.

**Patentansprüche**

1. Knotenpunkt eines verteilten Vermittlungssystems mit veränderlicher Bandbreite für ein Netz mit integrierten Diensten, in dem paketgeschaltete und durchgeschaltete Kommunikationen übertragen werden, mit einer Mehrzahl unabhängiger Moduln (MU1...MUn, MG1...MGn), die einerseits mit Leitungen ($u_1...u_n$, $g_1...g_m$) für Verbindungen mit Teilnehmern oder anderen Knotenpunkten und andererseits mit einer gemeinsamen Sammelleitung (1) verbunden sind, durch die die Information für alle Moduln zugänglich gehalten wird und auf der beim Vorliegen beider Kommunikationsarten die entsprechende Information in hybriden Rahmen organisiert ist, die in zwei Bereiche, nämlich für die durchgeschalteten Kommunikationen (Durchschaltebereich) und für die paketgeschalteten Kommunikationen und die Signalisierungen der durchgeschalteten Kommunikationen (Paketbereich) unterteilt sind, wobei diese Bereich wiederum in eine Mehrzahl von Kanälen unterteilt sind, von denen jeder einer Kommuikationsrichtung zugeteilt ist, dadurch gekennzeichnet, daß jeder der Moduln (MU1,...,MGm) zwei Teile umfaßt, von denen der erste Teil (IU, HL, SL, PL), die Leitungsinformation behandelt und aufgrund der Charakteristiken der Leitungen ($u_1$,...,$g_m$) spezialisiert ist, während der zweite Teil (IB) eine Schnittstellenschaltung zwischen dem Modul (MU1,...,MGm) und der Sammelleitung bildet, für sämtliche Moduln identisch ist und mit den Schnittstellenschaltungen (IB) aller anderen Moduln bei der Bildung und dynamischen Verwaltung der hybriden Rahmen auf der Sammelleitung zusammenarbeitet, so daß jedem Kanal des Durchschaltebereichs ein Band auf der Sammelleitung zugeordnet ist, das von Rahmen zu Rahmen entsprechend den augenblicklichen Erfordernissen der Kommunikation, der der Kanal zugeordnet ist, variieren kann, und so daß die von allen aktiven Kanälen in einem gegebenen Rahmen geführten Informationen nacheinander, nur durch eine Sicherheitszeit voneinander beabstandet, übertragen werden, wobei die dynamische Verwaltung in jeder Schnittstellenschaltung (IB) dadurch erzielt wird, daß auf das Buchen einer Durchschaltekommunikation die Nummer des jeder Kommunikationsrichtung zugeordnet Kanals gespeichert wird, diese Nummer auf der Grundlage der Auslösung der vorhergehenden Kanäle fortgeschrieben wird und die so fortgeschriebene Nummer mit der Nummer des laufenden Kanals verglichen wird, wobei ein positives Vergleichsergebnis das Senden oder Empfangen der Information durch die die Leitungsinformation behandelnden Vorrichtungen ermöglicht.

2. Knotenpunkt nach Anspruch 1, dadurch gekennzeichnet, daß der erste Teil (IU) des Moduls Vorrichtungen (PSH) umfaßt, die den Fluß der paketgeschalteten Information und die Signalisierungen der durchgeschalteten Kommunikationen verwalten und verarbeiten, sowie Vorrichtungen (CH) umfaßt, die den sich auf die durchgeschalteten Kommunikationen beziehenden Informationsfluß verarbeiten, wobei diese letzteren Vorrichtungen folgende Einzelschaltungen umfassen:

eine Batterie von Puffern (M1,...Mk), in der jeder Puffer vorübergehend einen zur Sammelleitung (1) gerichteten oder von dieser kommenden Informationsfluß speichert und in der jedem Puffer eine Steuerschaltung (CLS1,...,CLSk) zugeordnet ist, die die Lese- und Schreiboperationen steuert, wobei die Steuerschaltungen der Puffer (M1,...,Mk) für die zur Sammelleitung (1) gerichteten Informationsflüsse das Lesen in den Puffern bewirken, so daß in jedem Rahmen ein Informationsblock entsprechend dem in diesem Rahmen geforderten Band zur Sammelleitung (1) gegeben wird;

eine Steuerlogik (LCC), die mit den die Paketkommunikationen und Signalisierungen verwaltenden Vorrichtungen (PSY) und/oder mit den Sammelleitungs-Schnittstellenschaltungen (IB) die für die Steuerung der Durchschaltekommunikationen erforderlichen Informationen austauscht auf der Basis dieser Information die Steuerschaltungen (CLS1,...CLSk) zum Verwalten des zur Sammelleitung (1) gerichteten oder von dieser kommenden Informationsflusses voreinstellt und zur Sammelleitung den dem geforderten Band entsprechenden Informationsblock überträgt, und die Steuerschaltungen dazu ansteuert, zu bewirken, daß der zur Sammelleitung gerichtete oder von dieser kommande Informationsfluß entsprechend dem diesem Fluß zugeordneten Kanal aus dem Puffer gelesen oder in diesen geschrieben wird.

3. Knotenpunkt nach Anspruch 2, dadurch gekennzeichnet, daß die Schnittstellenschaltung (IB) folgende Funktionsblöcke enthält: Vorrichtungen (PSRH) zum Verwalten des Paketbereichs im Rahmen und Vorrichtungen (CSRH) für die dynamische Rahmenverwaltung und für den Zugang zur Sammelleitung für das durch die Kanäle des Durchschaltbereichs geführte Empfangen und Senden von Information, wobei diese Vorrichtungen miteinander für den Austausch von Signalen, die sich auf die Handhabung der Kanäle beziehen, verbunden sind und mit den Vorrichtungen (PSH), die den paketgeschalteten Informationsfluß behandeln, sowie mit dem Vorrichtungen (CH), die den durchgeschalteten Informationsfluß behandeln, verbunden sind, und weiterhin eine Vorrichtung (MB), die die Aktivität auf der Sammelleitung (1) überwacht und die Information über diese Aktivität zu den anderen Vorrichtungen der Schnittstellenschaltung (IB) liefert.

4. Knotenpunkt nach Anspruch 3, dadurch gekennzeichnet, daß die den Paketbereich handhabenden Vorrichtungen (PSRH) folgende Funktionsblöcke enthalten: Einrichtungen (RC), die in einem von der Sammelleitung kommenden Paketfluß Signalisierungspakete erkennen, die sich auf durchgeschaltete Kommunikationen beziehen und Steuerinformation, die eine Echtzeitverarbeitung in der Schnittstellenschaltung (IB) erfordern, enthalten, und die das Eintreffen dieser Pakete den Vorrichtungen (CSRH) für die dynamische Verwaltung der hybriden Rahmen signalisieren; Einrichten (MX2), die diese Steuerinformation aus den Paketen extrahieren und sie den Vorrichtungen (CSRH) für die dynamische Rahmenverwaltung liefern und sie durch andere Steuerinformation ersetzen, die von den Vorrichtungen für die dynamische Rahmenverwaltung geliefert wird und zum ersten Teil des Moduls zu senden ist; und Einrichtungen (MX1) zum Einfügen weiterer Steuerinformation, die ebenfalls von den Vorrichtungen für die dynamische Rahmenverwaltung geliefert wird, in entsprechende Signalisierungspakete, die an die Samelleitung zu geben sind.

5. Knotenpunkt nach Anspruch 3 oder 4, dadurch gekennzeichnet, daß die Vorrichtungen (CSRH) für die dynamische Rahmenhandhabung folgende Funktionsblöcke enthalten:

eine erste logische Schaltung (GRE), die so viele identische Elemente (im folgenden als "Register" bezeichnet) umfaßt, als Puffer (M1,...,Mk) vorhanden sind, wobei jedes Register Einrichtungen (DIS1,...,DISk), die die Zugänglichkeit zu den freien Registern steuert, und Einrichtungen (GIR1,...,GIRk), die die Nummer des dem Register zugeordneten Kanals speichern und die die das Senden und Empfangen ermöglichenden Signale erzeugt, umfaßt:

eine zweite logische Schaltung (GS), die die sich auf die Register und Kanäle beziehenden Signale verarbeitet und folgende Funktionsblöcke umfaßt: Einrichtungen (GSIM), die das Belegtsignal für ein zugängliches Register auf der Basis der Bestätigung der Übertragung eines Buchungspakets im Fall der Belegung zum Senden und auf der Basis der Erkennung eines der Signalisierungspakete im Fall der Belegung zum Empfang erzeugen; Einrichtungen (MUX), die ein Register mit der Nummer des einer der Kommunikationen zugeordneten Kanals beliefern, wobei diese Nummer für den Empfang aus dem Signalisierungspaket extrahiert wird oder für das Senden die Nummer des gegenwärtig laufenden Kanals ist; Einrichtungen (GTX), die Rahmen um Rahmen die Zahl aktivier Kanäle, die von dem Modul, zu dem sie gehören, behandelt werden, speichert und signalisiert, daß das Senden des letzten dieser Kanäle ermöglicht ist; Einrichtungen (GNCP), die den Vorrichtungen (PSRH) für die Paketbereichverwaltung die laufend durch die erste Logikschaltung (GRE) fortgeschriebene Nummer des für das Senden belegten Kanals, die in entsprechende zur Sammelleitung zu leitende Signalisierungspakete einzufügen ist, zugänglich machen; und Einrichtungen (GNRA), die die Nummer des belegten Kanals während des Sendens an die Steuerlogik (LCC) und während des Empfanges an die den Paketbereich verwaltenden Vorrichtungen (PSH) liefern, für die Einfügung dieser Nummer in entsprechende Signalisierungspakete, die zum ersten Teil des Moduls vorzugeben sind;

eine dritte logische Schaltung (GDT) für die Erzeugung von Zeitsteuersignalen, welche anzeigen, daß eine maximale Rahmendauer und eine maximale Zwischenzeit zwischen aneinandergrenzenden aktiven Kanälen vorüber ist;

eine vierte logische Schaltung (TR) für die Rahmenformation und Rahmenerhaltung, mit folgenden Funktionsblöcken: einer Einrichtung (GCT), die die Operationen der Rahmenformation startet und die Nummer des laufenden Kanals innerhalb eines bereits gebildeten Rahmens liefert; eine Einrichtung (GSOF), die in dem den ersten aktiven Kanal eines Rahmens behandelnden Modul die Erzeugung eines Rahmenstartsignals (SOF) ermöglicht; und eine Einrichtung (GRB) die die Erzeugung eines das Ende des Durchschaltebereichs anzeigenden Signals in dem den letzten aktiven Kanal des Durchschaltebereichs behandelnden Modul ermöglicht.

6. Knotenpunkt nach einem der vorhergehenden Ansprüche, dadurch gekennzeichnet, daß die dynamische Verwaltung des hybriden Rahmens nur die den Informationsflüssen, die von Quellen ausgehen, in welchen die Aktivitätsperioden durch ein Alternieren der Sprechstrecken und der Schweigestrecken gekennzeichnet sind, zugeordneten Kanäle betrifft.

7. Knotenpunkt nach Anspruch 6, dadurch gekennzeichnet, daß die den Informationsfluß verarbeitenden Vorrichtungen (CH) eine Einrichtung (LD) umfassen, die die Zustände der Sprechstrecke oder der Schweigestrecke oder die Übergänge von einem Zustand in den anderen erkennen und die Steuerschaltungen der Puffer (M1,...,Mk) dazu ansteuern, eine Zustands- oder Übergangs-Signalisierung alternativ oder zusätzlich zu einem Informationsblock in Abhängigkeit vom Fließzustand an die Sammelleitung zu geben.

8. Knotenpunkt nach Anspruch 6 oder 7, dadurch gekennzeichnet, daß die Vorrichtungen (CSRH) für die dynamische Rahmenverwaltung Einrichtungen (VC) umfassen, die für jedes Register die Möglichkeit der Fortsetzung des Sendens immer dann prüfen, wenn ein Übergang von einer Schweigestrecke zu einer Sprechstrecke in dem mit diesem Register zusammenhängenden Kanal erfolgt.

**Revendications**

1. Noeud de commutation distibué à bande variable pour un réseau avec intégration des services, dans lequel on transmet des communications commutées par paquets ainsi que des communications commutées par circuits, le noeud comprenant une pluralité de modules indépendants (MU1...MUn, MG1...MGm) connectés d'un côté à des lignes ($u_1...u_n$, $g_1...g_m$) de connexion avec des usagers ou des autres noeuds, et de l'autre côté à un bus commun (1) par lequel les informations sont rendues disponibles à tous les modules et sur lequel, en présence des deux genres de communications, les informations relatives sont organisées en trames hybrides subdivisées en deux zones assignées aux communications commutées par circuits (zone à circuit) et aux communications commutées par paquets et à la signalisation des communications commutées par circuits (zone à paquet), ces zones étant subdivisées en une pluralité de canaux dont chacun est assigné à un sens d'une communication, caractérisé en ce que chaque module (MU1...MGm) est formé par deux parties dont la première (IU, HL, SL, PL) traite les informations de ligne et est spécialisée d'après les caractéristiques des lignes ($u_1...g_m$), tandis que la seconde partie (IB) constitue une interface entre le module (MU1...MGm) et le bus, est identique pour tous les modules et coopère avec les interfaces (IB) de tous les autres modules pour former sur le bus et gérer de façon dynamique lesdites trames hybrides, de telle manière qu'à chaque canal de la zone à circuit soit assignée sur le bus une bande qui peut varier d'une trame à l'autre suivant les exigences instantanées de la communication à laquelle le canal est associé, et que les informations portées par tous les canaux actifs d'une trame soient transmises les unes après les autres, séparées seulement par un temps de garde, ladite gestion dynamique étant obtenue dans chaque interface (IB) en mémorisant, lors de la réservation d'une communication à circuit, le numéro du canal assigné à chaque sens de la communication, en mettant à jour ce numéro d'après la libération des canaux qui précèdent, et en comparent le numéro mis à jour avec le numéro du canal courant, le résultat positif de la comparaison validant l'envoi ou la réception des informations par les organes de traitement des informations de ligne.

2. Noeud selon la revendication 1, caractérisé en ce que ladite première partie du module comporte des moyens (PSH) pour la gestion et le traitement du flot des informations commutées par paquets et de la signalisation des communications commutées par circuits, et des moyens (CH) pour le traitement du flot des informations relatives aux communications commutées par circuits, ces derniers moyens comportant:

un ensemble de mémoires (M1...Mk), dont chacune mémorise temporairement un flot d'informations destiné au bus (1) ou en provenance de celui-ci, et est associée à un contrôleur (CLS1...CLSk) qui commande les opérations de lecture et écriture, les contrôleurs des mémoires (M1...Mk) pour les flots d'informations destinés au bus (1) commandant la lecture dans ces mémoires de telle façon que, pendant chaque trame, un bloc d'informations correspondant à la bande demandée dans la trame est envoyé au bus (1);

une logique de contrôle (LCC), qui: échange avec les moyens (PSY) de gestion des communications commutées par paquets et de la signalisation et/ou les moyens (IB) d'interface vers le bus les informations nécessaires pour la gestion des communications commutées par circuits; predispose, d'après ces informations, les contrôleurs (CLS1...CLSk) au traitement d'un flot d'informations destiné au bus (1) ou venant du bus (1) et à l'envoi au bus du bloc d'informations correspondant à la bande demandée; et valide ces contrôleurs à commander la lecture ou écriture en mémoire du flot des informations destiné au bus ou venant du bus, en correspondance du canal assigné à ce flot d'informations.

3. Noeud selon la revendication 2, caractérisé en ce que ladite interface (IB) comporte des moyens (PSRH) pour la gestion de la zone à paquet de la trame et des moyens (CSRH) pour la gestion dynamique de la trame et pour l'accès au bus pour la réception-transmission des informations portées par les canaux de la zone à circuit, ces moyens étant connectés les uns aux autres pour l'échange de signaux relatifs à la gestion desdits canaux, et étant connéctés respectivement aux moyens (PSH) de traitement du flot des informations commutées par paquets et aux moyens (CH) de traitement du flot des informations commutées par circuits, et un dispositif (MB) de surveillance de l'activité sur le bus (1), qui fournit les informations sur ladite activité aux autres organes de l'interface (IB).

4. Noeud selon la revendication 3, caractérisé en ce que les moyens (PSRH) de gestion de la zone à paquet comportent: des moyens (RC) pour reconnaître, parmi les paquets en provenance du bus, des paquets de signalisation relatifs aux communications commutées par circuits et contenant des informations de contrôle qui demandent un traitement en temps réel dans l'interface (IB), et pour signaler l'arrivée de ces paquets aux moyens (CSRH) de gestion dynamique de la trame hybride; des moyens (MX2) pour extraire de ces paquets et fournir aux moyens (CSRH) de gestion dynamique de la trame ces informations de contrôle et les remplacer par d'autres informations de contrôle, qui sont fournies par les moyens de gestion dynamique de la trame et doivent être envoyées à la première partie du module; et des moyens (MX1) pour introduire dans des paquets de signalisation appropriés, à envoyer sur le bus, d'autres informations de contrôle, également fournies par les moyens de gestion dynamique de la trame.

5. Noeud selon les revendications 3 ou 4, caractérisé en ce que les moyens (CSRH) de gestion dynamique de la trame comportent:

un premier réseau logique (GRE), formé par autant d'éléments identiques (dans la suite appelés "registres") qu'il y a de mémoires (M1...Mk), chaque registre comportant des moyens (DIS1...DISk) pour la gestion de la disponibilité des registres, libres et des moyens (GIR-1...GIRk) pour la mémorisation du numéro du canal associé au registre et la génération des signaux de validation à la transmission et à la réception;

un deuxième réseau logique (GS) pour le traitement des signaux relatifs aux registres et aux canaux, comportant; des moyens (GSIM) pour engendrer des signaux de saisie pour un registre disponible, d'après la confirmation de l'envoi d'un paquet de réservation, pour la saisie en transmission, et d'après la reconnaissance d'un desdits paquets de signalisation, pour la saisie en réception; des moyens (MUX) pour fournir à un registre le numéro du canal assigné à une communication, ce numéro étant lu dans ledit paquet de signalisation, pour la réception, ou étant le numéro du canal courant, pour la transmission; des moyens (GTX) pour mémoriser, à chaque trame, le nombre des signaux actifs traités par le module dont les moyens font partie et pour signaler la validation à la transmission du dernier canal; des moyens (GNCP) pour rendre disponible aux moyens (PSRH) de gestion de la zone à paquet le numéro, mis à jour continûment par le premier réseau logique (GRE), du canal pris pour la transmission, en vue de l'introduction de ce numéro dans des paquets de signalisation appropriés à envoyer sur le bus; et des moyens (GNRA) pour fournir le numéro du canal pris à ladite logique de contrôle (LCC), pour la transmission, et auxdits moyens (PSH) de gestion de la zone à paquet, pour la réception, en vue de l'introduction de ce numéro dans des paquets de signalisation appropriés à envoyer à la première partie du module;

un troisième réseau logique (GDT), pour engendrer des signaux de temps indiquant l'échéance d'un temps maximal de durée de la trame et d'un temps maximal de séparation entre des canaux actifs contigus;

un quatrième réseau logique (TR) la formation et le maintien de la trame, comportant: des moyens (GCT) pour initier les opérations de formation de la trame et fournir le numéro du canal courant à l'intérieur d'une trame déjà formée; des moyens (GSOF) pour valider, dans le module qui traite le premier canal actif d'une trame, la génération d'un signal de commencement de trame (SOF); et des moyens (GRB) pour valider, dans le module qui traite le dernier canal actif de la zone à circuit, la génération d'un signal indiquant la fin de cette zone.

6. Noeud selon l'une quelconque des revendications précédentes, caractérisé en ce que ladite gestion dynamique de la trame hybride ne concerne que les canaux associés aux flots d'informations produits par des sources dont les périodes d'activité comportent une alternance d'émissions et pauses.

7. Noeud selon la revendication 6, caractérisé en ce que les moyens (CY) de traitement du flot des informations comportent des moyens (LD) pour détecter des états d'émission ou de pause ou les transitions d'un étant à l'autre, et pour valider les contrôleurs des mémoires (M1...Mk) à envoyer une signalisation d'étant ou de transition vers le bus, au lieu d'un bloc d'information ou en plus de ce bloc, suivant l'état du flot des informations.

8. Noeud selon les revendications 6 ou 7, caractérisé en ce que les moyens (CSRH) de gestion dynamique de la trame comportent des moyens (VD), qui, pour chaque registre, controlent la possibilité de reprise de la transmission, chaque fois qu'il y a une transition de pause à emission dans le canal associé audit registre.

Fig.1

Fig.2

2a)

2b)

Fig. 3

Fig. 4

Fig. 5

Fig. 6

Fig. 7

Fig. 8

Fig. 9

Fig. 10

EP 0 134 544 B1

GSIM

Fig. 11a

Fig. 11b

Fig. 11c

EP 0 134 544 B1

GDT

Fig. 42

Fig. 13

Fig. 14

Fig. 15

Fig. 16

Fig. 17

Fig. 18

Fig. 19

Fig. 20

Fig. 21

EP 0 134 544 B1

Fig. 22

Fig. 23

Fig. 24

19